(19) **Europäisches Patentamt / European Patent Office / Office européen des brevets**

(11) **EP 4 765 843 A1**

(12) **EUROPEAN PATENT APPLICATION**

(43) Date of publication:
24.06.2026 Bulletin 2026/26

(21) Application number: 25215732.6

(22) Date of filing: 13.11.2025

(51) International Patent Classification (IPC):
H04N 23/61 (2023.01)     H04N 23/611 (2023.01)
H04N 23/661 (2023.01)    H04N 23/69 (2023.01)
H04N 23/695 (2023.01)    H04N 7/18 (2006.01)

(52) Cooperative Patent Classification (CPC):
H04N 23/661; H04N 7/18; H04N 23/61;
H04N 23/611; H04N 23/69; H04N 23/695

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.12.2024 JP 2024225511

(71) Applicant: Canon Kabushiki Kaisha
Tokyo, 146-8501 (JP)

(72) Inventor: KOMIYAMA, Tomoaki
Tokyo, 146-8501 (JP)

(74) Representative: Canon Europe Limited
European Intellectual Property Group
4 Roundwood Avenue
Stockley Park
Uxbridge UB11 1AF (GB)

(54) **IMAGE CAPTURING CONTROL APPARATUS, IMAGE CAPTURING CONTROL METHOD, PROGRAM AND DATA CARRIER**

(57)     To prevent unintended imaging in the case of automatically capturing an image of a subject, a control apparatus obtains an image captured by image capturing means, counts the number of subjects included in the image, and controls the image capturing means to switch, based on the number of subjects, between a first state of tracking a subject and a second state of stopping tracking of the subject.

## FIG.9

EP 4 765 843 A1

## Description

Technical Field

The present disclosure relates to an image capturing control apparatus, an image capturing control method, a program and data carrier.

BACKGROUND

In recent years, a technique in which an edge artificial intelligence (AI) device controls an image capturing apparatus (also referred to as a pan, tilt, and zoom (PTZ) camera) configured to change imaging directions (pan and tilt directions) and an angle of view (zoom value) to automatically capture images has been in widespread use. A technique for automatically controlling a PTZ camera by detecting a desired subject in a captured video image using artificial intelligence (AI) and controlling the PTZ camera to track the subject is known. The AI technique can be applied to determine the imaging direction of the PTZ camera based on a positional relationship among detected subjects, thereby making it possible to automatically control the PTZ camera so that not only a single subject, but also a plurality of subjects can fall within the angle of view.

Japanese Patent Laid-Open Publication No. 2019-29886 describes a moving object imaging system in which a movable camera configured to be movable in a vertical direction and a horizontal direction within an imaging range is used and a control unit controls a moving object group included in a predetermined area to fall within an imaging angle of view. The use of the technique described in Japanese Patent Laid-Open Publication No. 2019-29886 enables a PTZ camera to capture images, for example, in a competitive match, such as a judo or boxing match, including a plurality of players and referees, in such a manner that the plurality of players and referees can fall within an imaging angle of view. In other words, the control unit controls the imaging direction of the PTZ camera so that a plurality of players and referees can fall within the imaging angle of view of the PTZ camera, thereby making it possible to automatically capture images. In general, the number of players and the number of referees are determined in advance in a competitive match, such as a judo or boxing match. Therefore, it can be assumed that the control unit can detect a predetermined number of subjects within a match area depending on the type of the match and control imaging of subjects so that a subject group including the detected number of subjects can fall within the imaging angle of view, thereby enabling the PTZ camera to automatically capture an intended video image.

However, in some types of competitive match, more than a predetermined number of persons can enter the match area. For example, in a boxing match, a second that is an assistant of a boxer can enter the match area during an intermission between rounds, or a medical personnel can enter the match area due to an accident during the match. In such a case, persons other than the players that have entered the match area can be erroneously recognized as an imaging target, so that an unintended image can be captured by the PTZ camera.

SUMMARY

The present disclosure has been made in view of the above-described circumstances and is directed to preventing unintended imaging in the case of automatically capturing an image of a subject.

The present disclosure in its first aspect provides a control apparatus as specified in claim 1. Optional features of the first aspect are specified in claims 2 to 11. Optional features of the first aspect are also optional features of the other aspects. The present disclosure in its second aspect provides a control method as specified in claim 12. Optional features of the second aspect are specified in claim 13. Optional features of the second aspect are also optional features of the other aspects. The present disclosure in its third aspect provides a program as specified in claim 14. The present disclosure in its fourth aspect provides a computer-readable data carrier (storage medium) having stored thereon the above-mentioned program.

Features of the present disclosure will become apparent from the following description of embodiments with reference to the attached drawings. The following description of embodiments is described by way of example.

BRIEF DESCRIPTION OF THE DRAWINGS

Fig. 1 illustrates a configuration example of an imaging system according to a first embodiment.
Fig. 2 is a block diagram illustrating an internal configuration example of each device according to the first embodiment.
Fig. 3A is a flowchart illustrating an automatic selection area setup operation to be performed by a personal computer (PC) according to the first embodiment.

Fig. 3B is a flowchart illustrating an automatic selection area setup operation to be performed by an edge artificial intelligence (AI) device according to the first embodiment.

Fig. 4 illustrates an example of a user interface (UI) screen for making various settings regarding imaging.

Fig. 5A is a flowchart illustrating a bird's eye view composition setup operation to be performed by a pan, tilt, and zoom (PTZ) camera according to the first embodiment.

Fig. 5B is a flowchart illustrating a bird's eye view composition setup operation to be performed by the PC according to the first embodiment.

Fig. 5C is a flowchart illustrating a bird's eye view composition setup operation to be performed by the edge AI device according to the first embodiment.

Fig. 6A is a flowchart illustrating a tracking operation to be performed by the edge AI device according to the first embodiment.

Fig. 6B is a flowchart illustrating a tracking operation to be performed by the PTZ camera according to the first embodiment.

Fig. 7A illustrates a captured video image obtained by the PTZ camera as a Cartesian coordinate system (x, y).

Fig. 7B illustrates a spherical surface with a radius corresponding to a distance from the PTZ camera to a subject included in the captured video image in a three-dimensional space with an origin corresponding to the position of the PTZ camera.

Fig. 7C illustrates the current pan angle and tilt angle of the PTZ camera, assuming that the pan angle and the tilt angle are "0" degrees when the PTZ camera faces the front side of a match area.

Fig. 8A illustrates an example of a positional relationship between each player and a referee at the start of a match or at the end of a match.

Fig. 8B illustrates an example of a positional relationship between each player and a referee during a match.

Fig. 9 illustrates a state transition according to the first embodiment.

Fig. 10A is a flowchart illustrating an operation to be performed when the edge AI device is in a tracking standby state according to the first embodiment.

Fig. 10B is a flowchart illustrating an operation to be performed when the edge AI device is in a tracking state according to the first embodiment.

Fig. 10C is a flowchart illustrating an operation to be performed when the edge AI device is in a tracking stop state according to the first embodiment.

Fig. 11 illustrates a configuration example of an imaging system according to a second embodiment.

Fig. 12 is a block diagram illustrating an internal configuration example of each device according to the second embodiment.

Fig. 13A is a flowchart illustrating an automatic selection area setup operation to be performed by the PTZ camera according to the second embodiment.

Fig. 13B is a flowchart illustrating an automatic selection area setup operation to be performed by the PC according to the second embodiment.

Fig. 14A is a flowchart illustrating a bird's eye view composition setup operation to be performed by the PTZ camera according to the second embodiment.

Fig. 14B is a flowchart illustrating a bird's eye view composition setup operation to be performed by the PC according to the second embodiment.

Fig. 15 is a flowchart illustrating a tracking operation according to the second embodiment.

Fig. 16A is a flowchart illustrating an operation to be performed when the PTZ camera is in the tracking standby state according to the second embodiment.

Fig. 16B is a flowchart illustrating an operation to be performed when the PTZ camera is in the tracking state according to the second embodiment.

Fig. 16C is a flowchart illustrating an operation to be performed when the PTZ camera is in the tracking stop state according to the second embodiment.

DESCRIPTION OF THE EMBODIMENTS

Embodiments of the present disclosure will be described in detail with reference to the attached drawings. The following embodiments are not intended to limit the present disclosure, and not all combinations of features described in the embodiments are necessarily deemed to be essential to the present disclosure. The configuration of the embodiments can be appropriately modified or changed depending on the specifications of the apparatus to which the present disclosure is applied and various conditions (usage conditions, usage environment, etc.). In the following embodiments, the same or similar configurations and processing steps are denoted by the same reference numerals and redundant descriptions are omitted.

<First Embodiment>

[Configuration of Imaging System]

An imaging system according to a first embodiment is composed of, for example, an image capturing device (pan, tilt, and zoom (PTZ) camera) configured to change an imaging direction (pan and tilt directions) and an angle of view (zoom value), an edge artificial intelligence (AI) device, and a personal computer (PC). According to the first embodiment, the edge AI device functions as an image capturing control apparatus to control the PTZ camera. In the first embodiment, the edge AI device detects a desired subject from a captured video image obtained by the PTZ camera, and controls the imaging direction and the angle of view of the PTZ camera so that the subject can be automatically tracked.

An example where there are three persons, including two players that play a competitive match and one referee, as subjects to be detected will be described below. However, the number of subjects to be detected is not limited to three persons.

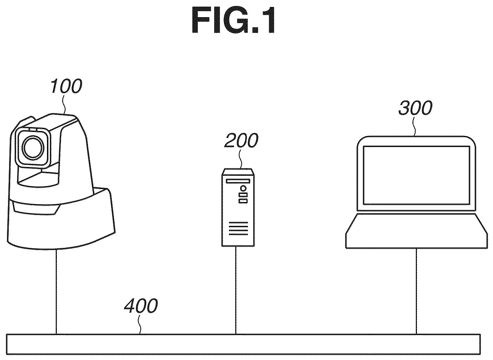

Fig. 1 illustrates a configuration example of an imaging system according to the first embodiment. As illustrated in Fig. 1, the imaging system has a configuration in which a PTZ camera 100, an edge AI device 200, and a PC 300 are interconnected via a network 400. The network 400 is, for example, a local area network (LAN), but instead may be any other network. Examples of the network 400 may also include a video cable.

The PTZ camera 100 corresponds to an example of an image capturing unit. The PTZ camera 100 includes an imaging optical system, an image sensor, and an image processing unit. The PTZ camera 100 transmits an image that is captured by the image sensor and is subjected to image processing by the image processing unit (this image is referred to as a captured video image) to each of the edge AI device 200 and the PC 300 via the network 400. The PTZ camera 100 includes a drive unit for pan/tilt/zoom driving operation. The drive unit causes the PTZ camera to rotate in pan and tilt directions, thereby changing the imaging direction (pan and tilt directions), and the drive unit changes the zoom value for the imaging optical system, thereby changing the angle of view. The configuration, function, operation, and the like in the PTZ camera 100 according to the first embodiment will be described in detail below.

The PC 300 transmits information for various settings regarding imaging to the edge AI device 200, and displays the captured video image received from the PTZ camera 100. Various settings regarding imaging include not only general imaging settings in the PTZ camera, but also settings for a predetermined target area to be described below, and settings for a predetermined composition to be described below. The PC 300 generates information about various settings regarding imaging based on an input from a user (e.g., an operator), and transmits the information about various settings regarding imaging to the edge AI device 200. The configuration, function, operation, and the like in the PC 300 according to the first embodiment will be described in detail below.

The edge AI device 200 performs inference processing using an AI on the captured video image received from the PTZ camera 100, thereby detecting a subject. The edge AI device 200 calculates the imaging direction and the angle of view of the PTZ camera 100 so as to track the subject based on the subject detected by inference processing and various settings regarding imaging received from the PC 300. The edge AI device 200 according to the first embodiment functions as the image capturing control apparatus, generates a control signal for controlling the imaging direction and the angle of view of the PTZ camera 100, and transmits the generated control signal to the PTZ camera 100 via the network 400. Thus, the PTZ camera 100 performs a pan operation, a tilt operation, and a zoom operation based on the control signal received from the edge AI device 200. As described in detail below, for example, the edge AI device 200 according to the first embodiment performs subject automatic tracking/imaging control processing using the PTZ camera 100, automatic switch processing of switching a composition or camerawork based on information about various settings regarding imaging, and the like. The configuration, function, operation, and the like in the edge AI device 200 according to the first embodiment will be described in detail below.

In the imaging system according to the first embodiment, the PC 300 accesses a web server in the edge AI device 200 based on an input from the user, and the PC 300 transmits, to the edge AI device 200, various kinds of settings information regarding imaging based on an input from the user. The edge AI device 200 controls the PTZ camera 100 so that the subject can be tracked by the PTZ camera 100. In addition, for example, the edge AI device 200 switches the composition to the predetermined composition to be described below. Various settings regarding imaging can be made not only by accessing the web server in the edge AI device 200, but also by various methods, including activation of an application program in the PC 300. The method of making various settings regarding imaging is not limited to any particular methods.

[Internal Configuration of Each Device in Imaging System]

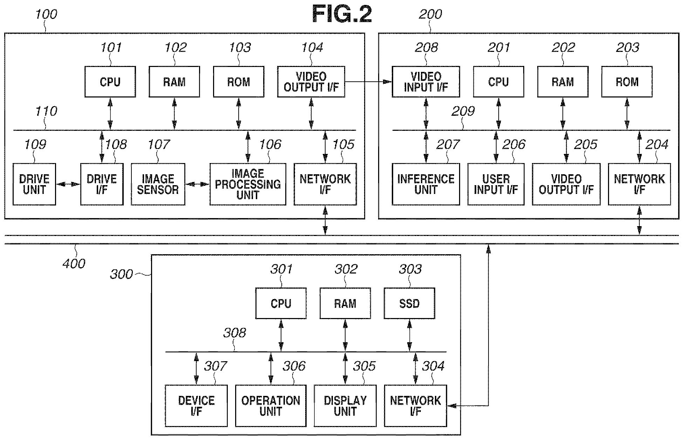

Fig. 2 is a block diagram illustrating an internal configuration example of each of the PTZ camera 100, the edge AI device 200, and the PC 300 included in the imaging system illustrated in Fig. 1.

An internal configuration of the PTZ camera 100 will now be described.

The PTZ camera 100 includes a central processing unit (CPU) 101, a random access memory (RAM) 102, a read-only memory (ROM) 103, a video output interface (I/F) 104, a network I/F 105, an image processing unit 106, an image sensor 107, a drive I/F 108, and a drive unit 109, which are interconnected via an internal bus 110. The image sensor 107 is connected to the image processing unit 106, and the drive unit 109 is connected to the drive I/F 108.

The CPU 101 controls an overall operation of the PTZ camera 100 and performs various arithmetic operations and the like. The CPU 101 executes programs loaded from the ROM 103 into the RAM 102, thereby implementing the operation and the like of the PTZ camera 100 as described below.

The ROM 103 is a non-volatile storage device as typified by a flash memory, a hard disk drive (HDD), a solid state drive (SSD), and a secure digital (SD) card. The ROM 103 is used not only as a permanent storage area for storing an operating system (OS), various programs, and various kinds of data, but also as a short-term storage area for temporarily storing various kinds of data.

The RAM 102 is a storage device such as a dynamic random access memory (DRAM). The OS, various programs, and various kinds of data can be loaded into the RAM 102 from the ROM 103. The RAM 102 can also be used as a work area for the OS and various programs.

The image sensor 107 includes an image sensor such as a charge-coupled device (CCD) sensor or a complementary metal-oxide-semiconductor (CMOS) sensor. The image sensor 107 obtains image data by capturing an optical image formed by an imaging optical system (not illustrated) and outputs the image data to the image processing unit 106.

The image processing unit 106 converts image data input from the image sensor 107 into that in a predetermined format, further performs image processing such as compression, as needed, and transfers the data to the RAM 102. Examples of the image processing performed by the image processing unit 106 include image quality adjustment processing on image data input from the image sensor 107 and cropping processing of cropping only a predetermined area in an image.

The video output I/F 104 is an I/F for outputting the captured video image, which is obtained by the image sensor 107 and is subjected to image processing by the image processing unit 106, to the outside.

The video output I/F 104 is composed of, for example, a serial digital interface (SDI) or a high-definition multimedia interface (HDMI®). The video output I/F 104 according to the first embodiment is connected to a video input I/F 208 of the edge AI device 200 to be described below.

The network I/F 105 is an I/F for connecting to the network 400 as described above. The network I/F 105 establishes communication with external devices such as the edge AI device 200 and the PC 300 via a communication path of Ethernet® or the like. In the first embodiment, a remote camera control for the PTZ camera 100 is performed by the edge AI device 200 via the network I/F 105, but instead may be performed via another I/F such as a serial communication I/F (not illustrated).

The drive I/F 108 is a connection unit to be connected to the drive unit 109 and establishes communication to transmit a control signal and the like to the drive unit 109 and receive information from the drive unit 109.

The drive unit 109 includes a mechanical drive system as a rotation mechanism for changing the imaging direction (pan and tilt directions) of the PTZ camera 100, a motor as a drive source, and the like. The drive unit 109 includes a lens drive system as a mechanism for focusing and changing the angle of view (zoom value) of the imaging optical system of the PTZ camera 100. The drive unit 109 drives the mechanical drive system as the rotation mechanism, the motor as the drive source, and the like so as to move the imaging direction of the PTZ camera 100 in the horizontal direction (pan direction) and the vertical direction (tilt direction) based on the control signal received from the CPU 101 via the drive I/F 108. Further, the drive unit 109 operates the lens drive system in the imaging optical system so as to perform a zoom operation and a focusing operation to optically change the angle of view based on the control signal received from the CPU 101 via the drive I/F 108.

Next, an internal configuration of the edge AI device 200 will be described.

The edge AI device 200 includes a CPU 201, a RAM 202, a ROM 203, a network I/F 204, a video output I/F 205, a user input I/F 206, an inference unit 207, and a video input I/F 208, which are interconnected via an internal bus 209.

The CPU 201 controls an overall operation of the edge AI device 200 and performs various arithmetic operations and the like. The CPU 201 executes programs loaded into the RAM 202 from the ROM 203, thereby implementing the operation and the like of the edge AI device 200 as described below.

The ROM 203 is a non-volatile storage device such as a flash memory, an HDD, an SSD, or an SD card. The ROM 203 is used not only as a permanent storage area for storing an OS, various programs, and various kinds of data, but also as a short-term storage area for temporarily storing various kinds of data.

The RAM 202 is a high-speed rewritable storage device such as a DRAM. The OS, various programs, and various kinds of data can be loaded into the RAM 202 from the ROM 203. The RAM 202 can also be used as a work area for the OS and various programs.

The network I/F 204 is an IF for connecting to the network 400, and establishes communication with external devices such as the PTZ camera 100 and the PC 300 via the network 400.

The video output I/F 205 outputs setting information or the like about the edge AI device 200 that is displayed within a user interface (UI) screen for setting the predetermined target area, the predetermined composition, and the like on the PC 300 as described below.

The user input I/F 206 connects to a mouse, a keyboard, and other input devices, and is composed of a universal serial bus (USB) or the like.

The video input I/F 208 receives captured video images from the PTZ camera 100 as described above, and is composed of an SDI, HDMI®, or the like.

The inference unit 207 infers the presence or absence of a subject, such as a person, as a predetermined detection target, and if there is such a subject, the inference unit 207 infers the position or the like of the subject, based on the captured video image received via the video input I/F 208 or the like. The inference unit 207 is composed of an arithmetic device dedicated to image processing and inference processing, such as a so-called graphics processing unit (GPU). If the inference unit 207 is applied to learning processing, a GPU is generally effective. An equivalent function may be implemented using a reconfigurable logic circuit such as a field programmable gate array (FPGA). The processing of the inference unit 207 may be performed by the CPU 201.

Next, an internal configuration of the PC 300 will be described.

The PC 300 includes a CPU 301, a RAM 302, an SSD 303, a network I/F 304, a display unit 305, an operation unit 306, and a device I/F 307, which are interconnected via an internal bus 308.

The CPU 301 controls an overall operation of the PC 300 and performs various arithmetic operations and the like. The CPU 301 executes programs loaded into the RAM 302 from the SSD 303, thereby implementing the operation and the like of the PC 300 as described below.

The SSD 303 is a non-volatile large-capacity storage device. The SSD 303 is used not only as a permanent storage area for storing an OS, various programs, and various kinds of data, but also as a short-term storage area for temporarily storing various kinds of data.

The RAM 302 is a high-speed rewritable storage device such as a DRAM. The OS, various programs, and various kinds of data can be loaded into the RAM 302 from the SSD 303. The RAM 302 can also be used as a work area for the OS and various programs.

The network I/F 304 is an I/F for connecting to the network 400 and establishes communication with external communication devices such as the PTZ camera 100 and the edge AI device 200 via the network 400. The communication in the PC 300 includes transmission of various kinds of settings information regarding imaging to the edge AI device 200 and reception of captured video images from the PTZ camera 100 and information indicating the current pan and tilt values (imaging direction) and zoom value (angle of view) of the PTZ camera 100.

The display unit 305 is a display device for displaying the captured video image from the PTZ camera 100, a UI screen for setting the predetermined target area and the predetermined composition to be described below, and the like. While the first embodiment illustrates an example where the PC 300 includes the display device, the first embodiment is not limited only to this configuration. For example, a controller and a display monitor exclusively used to display the captured video image and the UI screen may be separately provided.

The operation unit 306 is an I/F for receiving an operation on the PC 300 from the user. Examples of the operation unit 306 include a mouse, a keyboard, a button, a dial, a joystick, and a touch panel. The operation unit 306 receives a user operation and input on the UI screen used to, for example, set the predetermined target area and the predetermined composition to be described below. In the first embodiment, it is assumed that a mouse operation is performed as a user operation on the UI screen and a user pressing operation on a button or the like displayed on the UI screen to be described below is a mouse click operation. However, the user operation is not limited only to such operations. The user operation on the UI screen may include various operations such as a touch operation on a screen of a display device provided with a touch panel and the like. The PC 300 generates various kinds of settings information regarding imaging to set the predetermined target area and the predetermined composition to be described below based on a user operation on the UI screen, and transmits the various kinds of settings information to the edge AI device 200 via the network I/F 304.

The device I/F 307 is an I/F for connecting to various input devices and is composed of a USB or the like.

[Description of Operation of Each Device in Imaging System]

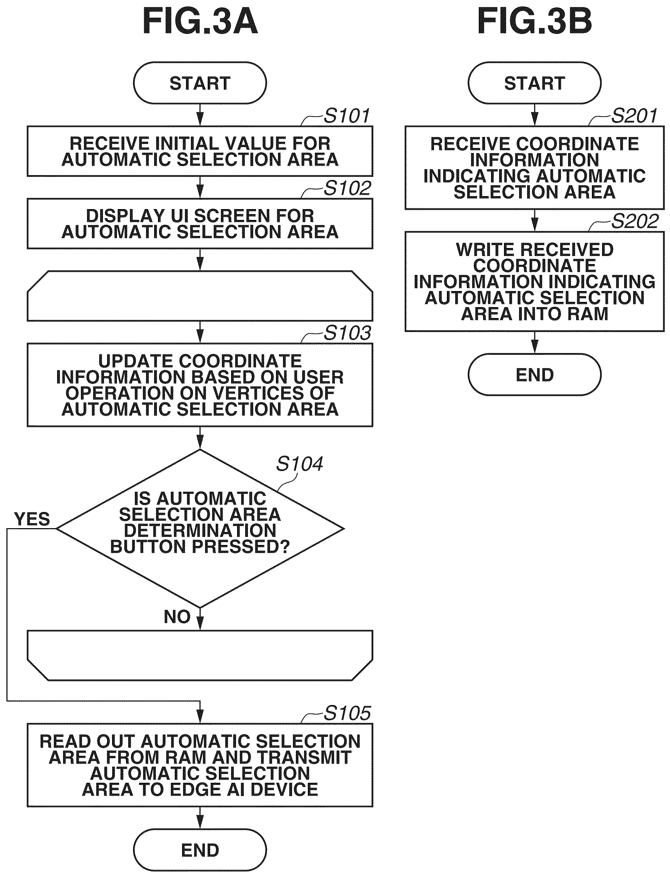

Next, an operation of each device in the imaging system will be described with reference to Figs. 3A to 8B.

In the first embodiment, the operation of the imaging system is roughly divided into a setup operation and a tracking operation. The setup operation is an operation for making various settings regarding imaging to set the predetermined target area, the predetermined composition, and the like to be described below before the tracking operation is started. The tracking operation is an operation for tracking a detection target based on various settings regarding imaging made in the setup operation.

<Setup Operation>

The setup operation will now be described.

In the first embodiment, the setup operation for making various settings regarding imaging includes a setup operation for setting the predetermined target area and a setup operation for setting the predetermined composition.

According to the first embodiment, in the setup operation for setting the predetermined target area, an automatic selection area is set. The automatic selection area is an area for automatically selecting and detecting a tracking target subject within the captured video image.

According to the first embodiment, in the setup operation for setting the predetermined composition, a setting for capturing an image with a composition in which the entirety of a match area can be captured at the center of the angle of view is made. Examples of the composition in which the entire match area can be captured at the center of the angle of view include a wide composition for capturing an image of a wider area in the match area. In the first embodiment, one example of the composition is a composition (hereinafter referred to as a bird's eye view composition) for capturing a bird's eye view image of the entire match area. For example, in a scene, such as a match scene including two players and one referee as illustrated in the first embodiment, a bird's eye view composition can be provided to capture an image of the scene in which the referee is located at the center and the players are located at the right and left positions at the start of the match or at the end of the match. The predetermined composition is not limited only to the composition in which the entire match area is located at the center of the angle of view, the wide composition, or the bird's eye view composition. For example, a composition arbitrarily set by the user, or a specific composition set depending on the type of a match or the intended use of imaging may be used.

In the imaging system according to the first embodiment, when each of the PC 300, the edge AI device 200, and the PTZ camera 100 is started, the PC 300 establishes a connection with each of the edge AI device 200 and the PTZ camera 100 and is brought into a standby state.

Upon receiving an automatic selection area setup instruction from the user through the operation unit 306, the PC 300 in the standby state starts an operation in a flowchart illustrated in Fig. 3A to be described below. When the automatic selection area setup instruction is input from the user, the PC 300 transmits a notification indicating the input of the automatic selection area setup instruction to the edge AI device 200. Upon receiving the notification from the PC 300, the edge AI device 200 starts an operation in a flowchart illustrated in Fig. 3B to be described below.

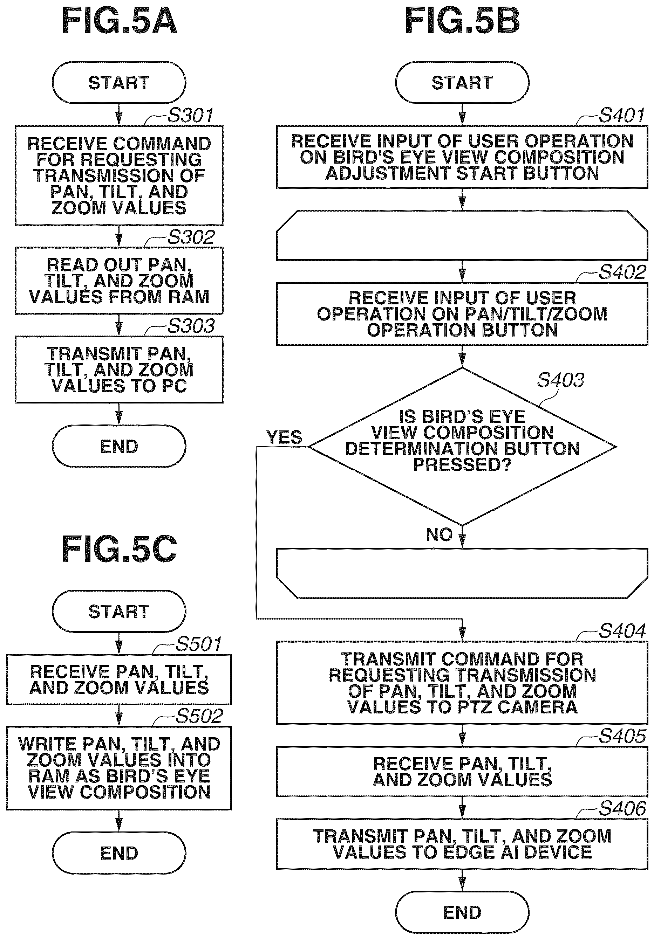

Upon receiving a bird's eye view composition setup instruction from the user through the operation unit 306, the PC 300 in the standby state starts an operation in a flowchart illustrated in Fig. 5B to be described below. Further, when the bird's eye view composition setup instruction is input from the user, the PC 300 transmits a notification indicating the input of the bird's eye view composition setup instruction to each of the edge AI device 200 and the PTZ camera 100. Upon receiving the notification from the PC 300, the PTZ camera 100 starts an operation in a flowchart illustrated in Fig. 5A to be described below. Upon receiving the notification from the PC 300, the edge AI device 200 starts an operation in a flowchart illustrated in Fig. 5C to be described below.

First, the operation in the flowchart illustrated in Fig. 3A to be executed in the PC 300 when the automatic selection area setup instruction is received from the user will be described.

In step S101, upon receiving the automatic selection area setup instruction from the user, the CPU 301 of the PC 300 reads out and receives an initial value for the automatic selection area from the SSD 303. As the automatic selection area indicated by the initial value, for example, an area selected from a fixed automatic selection area preliminarily determined for each type of match depending on the type of the match may be set, or the automatic selection area used last in the previous operation may be set. Further, the CPU 301 may send an inquiry to the edge AI device 200, for example, to obtain information about the initial value for the automatic selection area.

In step S102, the CPU 301 causes the display unit 305 to display a UI screen for the user to, for example, set the automatic selection area.

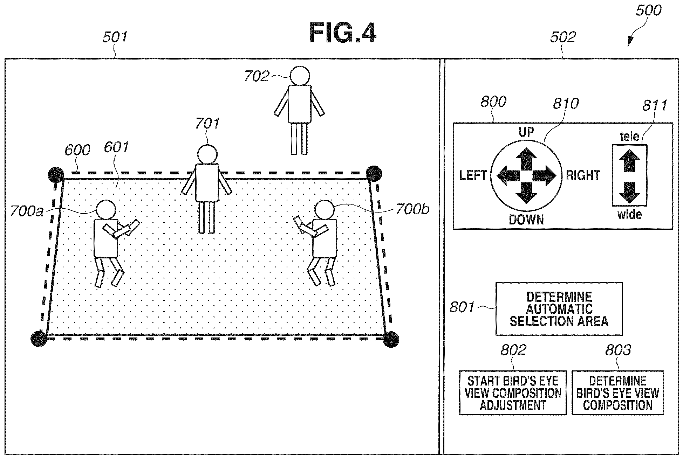

Fig. 4 illustrates an example of the UI screen used to, for example, set the automatic selection area. A UI screen 500 illustrated in Fig. 4 includes components for the user to, for example, adjust and determine the bird's eye view composition to be described below.

As illustrated in Fig. 4, the captured video image received from the PTZ camera 100 is displayed on a left-side area 501 of the UI screen 500, and an automatic selection area 600 is displayed in a superimposed manner on the captured video image. In the example illustrated in Fig. 4, the captured video image is a video image including not only two players 700a and 700b that play a match within a competitive match area 601 and one referee 701, but also, for example, a person 702 as a bench player or the like that is located outside of the competitive match area 601. The person 702 that is located outside of the competitive match area 601 is a bench player, but instead may be another person such as an audience. The automatic selection area 600 is an area set by the user through an operation on the operation unit 306 so that the automatic selection area 600 matches the competitive match area 601. For example, after the automatic selection area indicated by the initial value described above is set by the CPU 301, the user may set any automatic selection area 600 by operating the automatic selection area indicated by the initial value through the operation unit 306 as described below.

On a right-side area 502 of the UI screen 500, PTZ setting buttons 800, an automatic selection area determination button 801, a bird's eye view composition adjustment start button 802, and a bird's eye view composition determination button 803 are arranged. The automatic selection area determination button 801 is a button to be pressed by the user to determine the automatic selection area 600 after a user operation is performed on the automatic selection area 600 within the left-side area 501 of the UI screen 500. The PTZ setting buttons 800 include a directional pad 810 for the user to set the pan and tilt values of the PTZ camera 100, and a tele/wide button 811 for the user to set the zoom value (angle of view) of the PTZ camera 100. If the directional pad 810 or the tele/wide button 811 in the PTZ setting buttons 800 is operated by the user, the PC 300 transmits a pan/tilt/zoom control command corresponding to the user operation information to the PTZ camera 100. Thus, the imaging direction and the angle of view of the PTZ camera 100 can be changed and the captured video image displayed on the left-side area 501 of the UI screen 500 can also be changed. The PTZ setting buttons 800 is also used to adjust the bird's eye view composition to be described below. The roles of the bird's eye view composition adjustment start button 802 and the bird's eye view composition determination button 803 and the role of the PTZ setting buttons 800 to adjust the bird's eye view composition will be described below.

While the first embodiment illustrates an example where the user sets any automatic selection area 600 based on the automatic selection area indicated by the initial value, the first embodiment is not limited to this example. For example, the CPU 301 may detect the competitive match area 601 from the captured video image using an AI technique or the like, and may automatically set the automatic selection area 600 depending on the detected competitive match area 601. In the example illustrated in Fig. 4, the automatic selection area 600 is represented as a square area. However, the shape of the automatic selection area 600 is not limited to this example. For example, the automatic selection area 600 may have any shape such as a polygonal shape or a circular shape, as long as the automatic selection area 600 has a shape that matches the competitive match area 601. In the first embodiment, the automatic selection area 600 is an area in which a subject to be tracked is automatically selected in the captured video image as described below. Accordingly, tracking target subjects, such as players and a referee, can be distinguished from other subjects such as bench players. In other words, bench players, an audience, and the like that are located outside of the automatic selection area 600 can be excluded from the tracking target, so that only the players and the referee that are located within the automatic selection area can be tracked.

The UI screen 500 illustrated in Fig. 4 may be displayed using an application program run on the PC 300. Alternatively, a web server may be incorporated in the edge AI device 200 and a UI screen downloaded by the PC 300 from the web server as a content may be displayed.

Referring again to Fig. 3A, the description of the flowchart is continued.

After the processing of step S102, the CPU 301 repeatedly performs loop processing of steps S103 and S104 until the automatic selection area determination button 801 is pressed by the user.

In step S103, the CPU 301 obtains a user operation on four vertices of the automatic selection area 600 from the operation unit 306, and sets the automatic selection area 600 based on the position of each vertex on which the user operation is performed. In other words, the user can set any automatic selection area 600 by performing an operation on each vertex of the automatic selection area 600 through the operation unit 306.

The CPU 301 writes coordinate information about each vertex of the automatic selection area 600 set based on the user operation into the RAM 302. The user operation on the position of each of the four vertices of the automatic selection area 600 can be implemented by various operations including a drag and drop operation by a mouse operation. The user operation according to the first embodiment is not limited to any of such operations.

In step S104, the CPU 301 determines whether the automatic selection area determination button 801 is pressed by the user through the operation unit 306. If the CPU 301 determines that the automatic selection area determination button 801 is pressed (YES in step S104), the loop processing ends and the processing proceeds to step S105.

In step S105, the CPU 301 reads out coordinate information about the automatic selection area 600 stored in the RAM 302, and transmits the coordinate information to the edge AI device 200 via the network I/F 304.

Next, processing in the flowchart of Fig. 3B to be executed by the edge AI device 200 during an automatic selection area setup operation will be described.

In step S201, the CPU 201 of the edge AI device 200 is in the standby state to receive coordinate information about the automatic selection area and receives the coordinate information about the automatic selection area from the PC 300 via the network I/F 204.

In step S202, the CPU 201 writes the received coordinate information about the automatic selection area into the RAM 202.

Next, processing in the flowchart of Fig. 5B to be executed by the PC 300 upon receiving a bird's eye view composition setup instruction from the user will be described.

As a bird's eye view composition setup operation, the PC 300 sets the imaging direction (pan and tilt values) and the angle of view (zoom value) of the PTZ camera 100 that are to be set for the bird's eye view composition on the edge AI device 200. In the first embodiment, the bird's eye view composition is a composition for capturing a bird's eye view image with a composition in which the entire match area is located at the center of the angle of view as described above and the referee is located at the center and the players are located at the left and right positions at the start of the match or at the end of the match.

Assume that the bird's eye view composition is, for example, a composition for a captured video image displayed on the left-side area 501 of the UI screen 500 illustrated in Fig. 4, or a composition including not only the players 700a and 700b and the referee 701 within the competitive match area 601, but also the person 702 such as a bench player located outside of the competitive match area 601.

At the start of the bird's eye view composition setup operation, the CPU 301 of the PC 300 is in the standby state to receive an input of a user operation on the bird's eye view composition adjustment start button 802 arranged on the right-side area 502 of the UI screen illustrated in Fig. 4.

In step S401, upon receiving pressing of the bird's eye view composition adjustment start button 802 as an input from the user, the CPU 301 repeatedly performs processing loop of steps S402 and S403 until the bird's eye view composition determination button 803 is pressed.

On the UI screen 500 illustrated in Fig. 4, the bird's eye view composition adjustment start button 802 arranged on the right-side area 502 is a button to be pressed when the user issues an instruction to start adjustment of the bird's eye view composition. The bird's eye view composition determination button 803 is a button to be pressed when the user issues an instruction to determine the bird's eye view composition. When the bird's eye view composition adjustment start button 802 is pressed, the PC 300 determines that the user has issued an instruction to start adjustment of the bird's eye view composition. If the directional pad 810 and the tele/wide button 811 of the PTZ camera 100 are operated by the user, the PC 300 transmits a control command including pan, tilt, and zoom drive directions and drive amounts depending on the user operation to the PTZ camera 100. Thus, the PTZ camera 100 performs a bird's eye view composition adjustment operation by adjusting the pan, tilt, and zoom values. As a result of this bird's eye view composition adjustment operation, if the user determines that the bird's eye view composition is satisfactory and presses the bird's eye view composition determination button 803, the PC 300 determines the pan, tilt, and zoom values of the PTZ camera 100 obtained at the time to be the pan, tilt, and zoom values for the bird's eye view composition. The pan, tilt, and zoom values for the bird's eye view composition are stored in the edge AI device 200.

Referring again to Fig. 5B, the description of the flowchart is continued.

In step S402, the CPU 301 waits for an input of a user operation on the directional pad 810 or the tele/wide button 811 of the PTZ setting buttons 800 illustrated in Fig. 4. When a user operation on the directional pad 810 or the tele/wide button 811 of the PTZ setting buttons 800 is input, the CPU 301 transmits a pan/tilt/zoom control command corresponding to user operation information to the PTZ camera 100. For example, if a pan/tilt operation on the directional pad 810 is input, the PC 300 transmits a control command for pan/tilt driving of the PTZ camera based on the pan and tilt values depending on the operation to the PTZ camera 100 via the network I/F 304. For example, if a zoom operation using the tele/wide button 811 is input, the CPU 301 transmits a control command for zoom driving of the PTZ camera based on the zoom value depending on the operation to the PTZ camera 100 via the network I/F 304.

In step S403, the CPU 301 determines whether pressing of the bird's eye view composition determination button 803 is received as an input from the user through the operation unit 306. If the CPU 301 determines that pressing of the bird's eye view composition determination button 803 is received as an input (YES in step S403), the loop processing ends and the processing proceeds to step S404.

In step S404, the CPU 301 transmits a command for requesting transmission of the current pan, tilt, and zoom values to the PTZ camera 100.

In step S405, the CPU 301 receives information transmitted from the PTZ camera 100 via the network I/F 304 as a response to the request command transmitted in step S404. Accordingly, the CPU 301 receives the current pan, tilt, and zoom values of the PTZ camera 100 from the PTZ camera 100.

In step S406, the CPU 301 transmits the pan, tilt, and zoom values received in step S405 to the edge AI device 200 via the network I/F 304. These pan, tilt, and zoom values are used as values for setting the imaging direction and the angle of view corresponding to the bird's eye view composition for the PTZ camera 100 in the edge AI device 200.

Next, an operation to be performed by the PTZ camera 100 after the pan, tilt, and zoom values for the bird's eye view composition are determined in the bird's eye view composition setup operation described above will be described with reference to the flowchart illustrated in Fig. 5A.

In step S301, the CPU 101 of the PTZ camera 100 is in the standby state to receive a command transmitted from the PC 300, and receives a command for requesting transmission of pan, tilt, and zoom values from the PC 300 via the network I/F 105.

In step S302, the CPU 101 reads out the current pan, tilt, and zoom values stored in the RAM 102.

In step S303, the CPU 101 transmits the current pan, tilt, and zoom values read out from the RAM 102 to the PC 300 via the network I/F 105.

Next, an operation to be performed by the edge AI device 200 after the pan, tilt, and zoom values for the bird's eye view composition are determined in the above-described bird's eye view composition setup operation will be described with reference to the flowchart illustrated in Fig. 5C.

In step S501, the CPU 201 of the edge AI device 200 is in the standby state to receive information transmitted from the PC 300, and receives the pan, tilt, and zoom values for setting the bird's eye view composition from the PC 300 via the network I/F 204.

In step S502, the CPU 201 writes the received pan, tilt, and zoom values into the RAM 202 as the pan, tilt, and zoom values for the bird's eye view composition.

[Operation during Tracking and Switching to Bird's Eye View Composition]

The imaging system according to the first embodiment is configured to switch a control operation for the PTZ camera 100 between a first control operation and a second control operation different from the first control operation depending on a distance between subjects. This operation will be described below.

According to the first embodiment, for example, a control operation for operating the PTZ camera 100 to automatically track a subject is performed as the first control operation, and a control operation for controlling the PTZ camera 100 based on a bird's eye view composition is performed as the second control operation.

In the imaging system according to the first embodiment, after the setup operation for the automatic selection area and the bird's eye view composition described above is completed, a subject tracking operation and a bird's eye view composition switching operation are performed using various kinds of settings information regarding imaging set in the setup operation. In the imaging system according to the first embodiment, the edge AI device 200 detects a subject position from a video image captured obtained by the PTZ camera 100, and controls the pan, tilt, and zoom values of the PTZ camera 100 depending on the subject position, thereby performing an automatic tracking operation. Further, the edge AI device 200 obtains a distance between subjects based on inferred subject positions and switches the operation between the automatic tracking operation and the bird's eye view composition operation based on the distance between subjects.

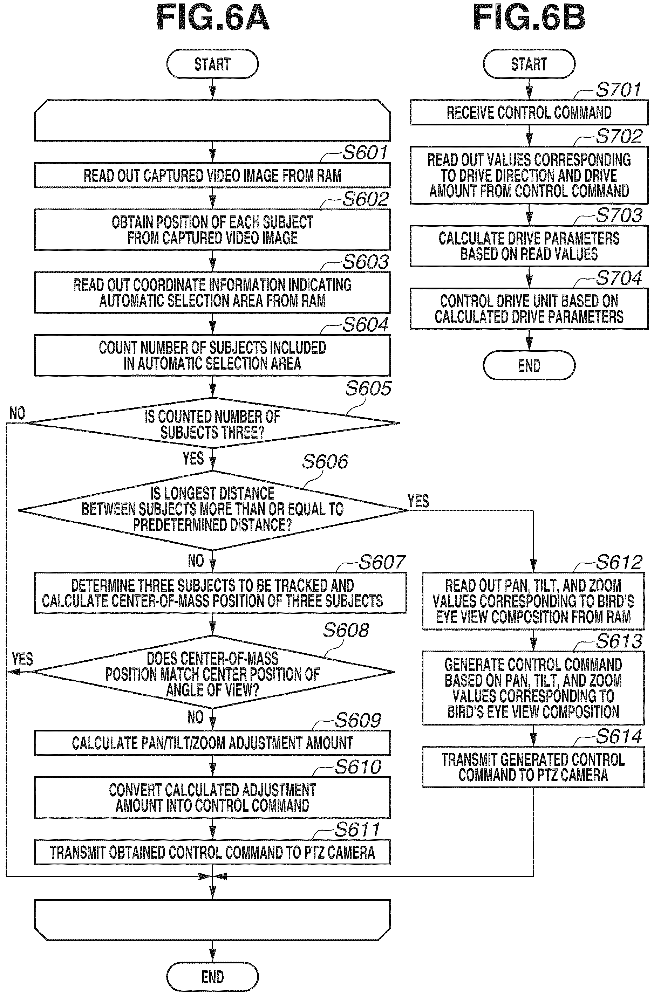

Fig. 6A is a flowchart illustrating a tracking operation to be performed by the edge AI device 200. During execution of tracking operation control, the edge AI device 200 obtains the distance between subjects from the captured video image, and determines whether the operation is switched to the bird's eye view composition operation depending on the obtained distance between subjects. Fig. 6B is a flowchart illustrating an operation to be performed by the PTZ camera 100.

First, the tracking operation control operation and the bird's eye view composition switching operation to be executed by the edge AI device 200 will be described with reference to the flowchart illustrated in Fig. 6A.

In the imaging system according to the first embodiment, the PTZ camera 100 sequentially transmits a captured video image from the video output I/F 104 at a predetermined frame rate. The edge AI device 200 sequentially receives via the video input I/F 208 the captured video image sequentially transmitted from the PTZ camera 100 at a predetermined frame rate, and sequentially stores the captured video image into the RAM 202. The PTZ camera 100 may sequentially transmit the captured video image from the network I/F 105 at a predetermined frame rate. In this case, the edge AI device 200 sequentially receives the captured video image via the network I/F 204 and stores the captured video image into the RAM 202. Loop processing of steps S601 to S611 illustrated in Fig. 6A is performed by the edge AI device 200 on each frame of the captured video image.

In step S601, the CPU 201 of the edge AI device 200 sequentially reads out the captured video image stored in the RAM 202, and transfers the captured video image to the inference unit 207.

In step S602, the inference unit 207 detects a subject from the captured video image and writes inference result information as the detection result into the RAM 202. In the first embodiment, the inference unit 207 includes a learned model created using a machine learning technique such as deep learning, obtains a captured video image as input data, and outputs an inference result as output data. The inference result includes not only positional information about persons, including the players and the referee, as subjects to be tracked, but also a type (e.g., a player or a referee) of the tracking target and a score representing the likelihood of the tracking target.

The positional information about each subject (person) includes not only coordinate information about four vertices, i.e., upper left, upper right, lower left, and lower right vertices, of a rectangular area enclosing the subject, but also information about the width, height, and the like of the rectangular area. The inference unit 207 obtains an information set of inference results.

In step S603, the CPU 201 reads out coordinate information indicating the automatic selection area stored in the RAM 202 in step S202 illustrated in Fig. 3B described above, from the RAM 202.

In step S604, the CPU 201 reads out positional information about the rectangular area enclosing the subject in the reference results stored in the RAM 202 in step S602, and counts the number of subjects present in the automatic selection area based on the positional information about the rectangular area. In other words, the CPU 201 counts the number of persons present in the automatic selection area. In the first embodiment, the CPU 201 counts the number of subjects with the center point on the bottom side of the rectangular area being included in the automatic selection area as a subject present in the automatic selection area.

To enable determination as to whether the subject is included in the automatic selection area regardless of the pan and tilt directions and the zoom value of the PTZ camera 100, the CPU 201 converts a coordinate system representing coordinate information indicating the center point on the bottom side of the rectangular area enclosing the subject and the automatic selection area into a predetermined coordinate system. In the first embodiment, coordinate information indicating the center point on the bottom side of the rectangular area of the subject and each vertex of the automatic selection area is coordinate information indicating a Cartesian coordinate system represented by (x, y) on the captured video image. Accordingly, the CPU 201 converts the Cartesian coordinate system coordinate information into polar coordinate information assuming that the pan and tilt angles when the PTZ camera 100 faces the front side of the match area are "0" degrees, the angle in the pan direction is θq[rad], and the angle in the tilt direction is φq[rad]. As a result, coordinate information indicating the subject and the automatic selection area can be represented as coordinate information independent of the pan, tilt, and zoom values of the PTZ camera 100. Accordingly, the CPU 201 can determine whether the subject is included in the automatic selection area regardless of the pan, tilt, and zoom values of the PTZ camera 100.

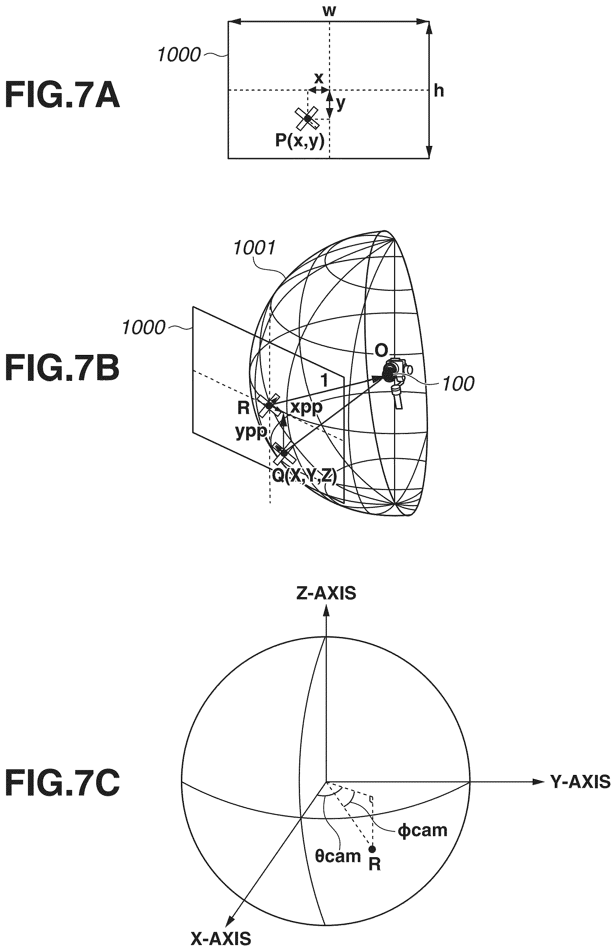

As an example of the method for converting a Cartesian coordinate system represented by (x, y) into a polar coordinate system, a method of converting two-dimensional coordinates P(x, y) on the captured video image into three-dimensional coordinates Q(X, Y, Z) with an origin corresponding to the PTZ camera 100 will be described below with reference to Figs. 7A to 7C.

Fig. 7A illustrates a captured video image 1000 obtained by the PTZ camera 100 as a Cartesian coordinate system represented by (x, y), and also illustrates a point (pixel) at which two-dimensional coordinates P(x, y) illustrated in Fig. 7A are converted into three-dimensional coordinates Q(X, Y, Z). In Fig. 7A, x [pixel] on the right side of the captured video image 1000 represents a positive value, and y [pixel] on the bottom side of the captured video image 1000 represents a positive value. The size of the captured video image 1000 is represented by w × h [pixels].

Fig. 7B illustrates a spherical surface 1001 with a radius corresponding to a distance from the PTZ camera 100 to a subject included in the captured video image in a three-dimensional space with an origin O corresponding to the position of the PTZ camera 100. For ease of explanation, the radius of the spherical surface 1001 is normalized to "1" in Fig. 7B. As illustrated in Fig. 7B, when the spherical surface is represented in a three-dimensional space with an origin O corresponding to the position of the PTZ camera 100, the captured video image 1000 illustrated in Fig. 7A can be represented as a two-dimensional image that is in contact with the spherical surface 1001 at a center R thereof.

Fig. 7C illustrates the current pan angle θcam and tilt angle φcam of the PTZ camera 100, assuming that the pan angle and the tilt angle are "0" degrees when the PTZ camera 100 faces the front side of the match area. Assume that the front side of the PTZ camera 100 corresponds to an x-axis direction illustrated in Fig. 7C. The pan angle θcam, the tilt angle φcam, the zoom angle of view ψwcam (not illustrated) in the horizontal direction, and the zoom angle of view ψhcam (not illustrated) in the vertical direction can be obtained in such a manner that the edge AI device 200 requests the PTZ camera 100 to transmit the current pan, tilt, and zoom values.

As illustrated in Fig. 7B, when the distance from the center R of the captured video image 1000 to the three-dimensional coordinates Q(X, Y, Z) in the x-axis direction is represented as "xpp" and the distance in a y-axis direction is represented as "ypp", the distances "xpp" and "ypp" can be obtained by the following equations (1) and (2), respectively. Further, the three-dimensional coordinates Q(X, Y, Z) can be obtained by the following equation (3).

$$xpp = 2x \times \tan(\psi wcam/2)/w \tag{1}$$

$$ypp = -2y \times \tan(\psi hcam/2)/h \tag{2}$$

$$\begin{pmatrix} X \\ Y \\ Z \end{pmatrix} = \begin{pmatrix} \cos\theta cam & -\sin\theta cam & 0 \\ \sin\theta cam & \cos\theta cam & 0 \\ 0 & 0 & 1 \end{pmatrix} \begin{pmatrix} \cos\phi cam & 0 & -\sin\phi cam \\ 0 & 1 & 0 \\ \sin\phi cam & 0 & \cos\phi cam \end{pmatrix} \begin{pmatrix} 1 \\ xpp \\ ypp \end{pmatrix} \tag{3}$$

Since the orientation of the PTZ camera 100 is defined by the directions of the pan angle θcam and the tilt angle φcam, the three-dimensional coordinates Q(X, Y, Z) can be calculated by rotating the coordinate axis by the pan angle θcam about the Z-axis and by the tilt angle φcam about the Y-axis as indicated by equation (3).

As described above, the CPU 201 can convert the point P(x, y) on the captured video image 1000 into the three-dimensional coordinates Q(X, Y, Z) with the origin corresponding to the position of the PTZ camera 100.

Next, the CPU 201 converts the three-dimensional coordinates Q(X, Y, Z) into the pan angle θq and the tilt angle φq as viewed from the PTZ camera 100 by the following equations (4) and (5).

$$\theta\, q = \arctan\left(\frac{Y}{X}\right)$$

$$(4)$$

$$\phi\, q = \arctan(Z/\sqrt{X^2 + Y^2})$$

$$(5)$$

As described above, the CPU 201 converts coordinate information indicating the center point on the bottom side of the rectangular area of the subject and the four vertices representing the automatic selection area into the pan angle θq and the tilt angle φq as viewed from the PTZ camera 100, and performs calculations based on equations (1) to (5). This enables the CPU 201 to execute the processing of step S604 even when the pan, tilt, and zoom values of the PTZ camera 100 are changed.

The polar coordinates calculation method as described above is merely an example. Any existing calculation method may be used as a calculation method for converting coordinate information into polar coordinates.

In the first embodiment, coordinate information is converted into polar coordinates based on the pan, tilt, and zoom values of the PTZ camera 100. However, for example, in a camera configured to control only the pan value, coordinate information can be converted into polar coordinates based on the pan value. The same holds for a camera configured to control only the tilt value, and coordinate information can be converted into polar coordinates based on the tilt value.

Referring again to Fig. 6A, the description of the flowchart is continued.

In step S605, the CPU 201 determines whether the number of subjects counted in step S604 satisfies a predetermined condition, that is, a predetermined number. Since the first embodiment illustrates an example where there are two players that play a match and one referee as described above, the predetermined number determined in step S605 is three. If the CPU 201 determines that the counted number of subjects is three (YES in step S605), the processing proceeds to step S606 and subsequent steps, that is, automatic tracking processing. If the CPU 201 determines that the counted number of subjects is not three (NO in step S605), the processing of steps S606 to S611 is skipped and the processing proceeds to the subsequent loop processing.

In a case where it is determined that the number of subjects is three and the tracking operation is started and then it is determined that the number of subjects is not three in step S605 in the loop processing, the CPU 201 may control the pan, tilt, and zoom values of the PTZ camera 100 to be fixed. Specifically, after the CPU 201 starts the automatic tracking processing, for example, when the number of subjects within the automatic selection area becomes less than the predetermined number (less than three), the CPU 201 stops the automatic tracking control operation. Examples of the case where the number of subjects becomes less than three may include a case where two of the three players have left the automatic selection area and are located outside of the automatic selection area, and thus the number of subjects becomes less than three. In this case, the automatic tracking control operation is stopped, thereby preventing a situation where the tracking operation is mainly performed on one person (e.g., one referee) left in the automatic selection area (match area) and two players are framed out. After that, if the two players return to the automatic selection area and the CPU 201 determines that the number of subjects within the automatic selection area is three in step S605, the processing proceeds to step S606 and control processing (automatic tracking) of the PTZ camera 100 is performed again.

In step S606, the CPU 201 performs distance obtaining processing of measuring a distance between subjects included in the automatic selection area and distance determination processing of determining whether a longest (farthest) distance between subjects among the distances between subjects is more than or equal to a predetermined distance. The predetermined distance is a distance threshold set as an appropriate distance depending on the type of a match. For example, in a competitive match, such as a judo or sumo match, in which positions of players at the start of the match are substantially determined, a distance between players at the start of the match can be set as the predetermined distance. However, the predetermined distance is not limited only to this example, and various distances may be set depending on the type of a match. Any distance arbitrarily set by the user may be set.

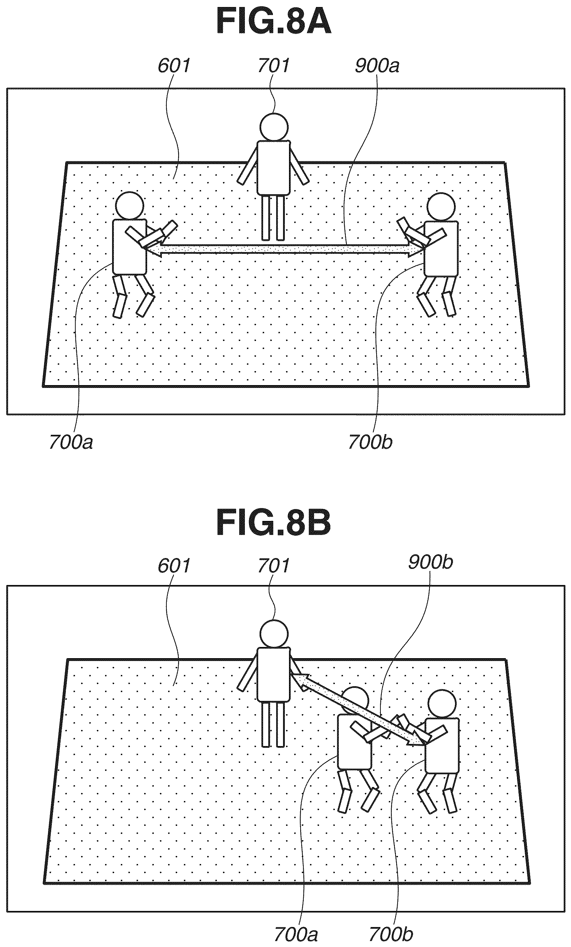

A distance between subjects and a longest distance between subjects will be described with reference to Figs. 8A and 8B.

Fig. 8A illustrates an example of a positional relationship between each player and a referee at the start of a match or at the end of a match. Fig. 8B illustrates an example of a positional relationship between each player and a referee during a match.

In the positional relationship between each player and the referee at the start of the match or at the end of the match illustrated in Fig. 8A, a longest inter-subject distance 900a among distances between subjects, including the two players 700a and 700b and one referee 701, corresponds to the distance between the player 700a and the player 700b. On the other hand, in the positional relationship between each player and the referee during the match as illustrated in Fig. 8B, the distance between each of the players 700a and 700b and the referee 701 tends to decrease in many cases. In the example illustrated in Fig. 8B, a longest inter-subject distance 900b corresponds to, for example, the distance between the player 700b and the referee 701. Thus, the longest distance between subjects at the start of the match or at the end of the match is different from the longest distance between subjects during the match in many cases. Therefore, obtaining the longest distance between subjects makes it possible to determine a status, for example, at the start of the match, at the end of the match, or during the match.

In the first embodiment, the distance between subjects at the start of the match is set as the predetermined distance as described above. Accordingly, for example, when the longest distance between subjects is less than the predetermined distance, the state can be determined to be during the match. On the other hand, if the longest distance between subjects is more than or equal to the predetermined distance, the state can be determined to be at the start of the match or at the end of the match.

In step S606, if the CPU 201 determines that the longest distance between subjects is less than the predetermined distance (NO in step S606), the processing proceeds to step S607.

In step S607, the CPU 201 determines three subjects detected in the automatic selection area to be the tracking target, and further calculates the position of the center of mass of each of the three subjects. For example, the CPU 201 calculates the position of the center of mass of two or more (e.g., three) subjects based on the average of center point positions of rectangular areas of the subjects. The method of calculating the position of the center of mass of the subjects is not limited to this method. Any other method may be used. For example, the center point of a circumscribed rectangular area enclosing all the three subjects may be set as the position of the center of mass, or the players may be discriminated from the referee and the average of center point positions of only the players may be set as the position of the center of mass.

In step S608, the CPU 201 determines whether the position of the center of mass calculated in step S607 matches the center position of the angle of view on the captured video image. If the CPU 201 determines that the position of the center of mass matches the center position of the angle of view (YES in step S608), the processing of steps S609 to S611 is skipped and the processing proceeds to the subsequent loop processing. On the other hand, if the CPU 201 determines that the position of the center of mass does not match the center position of the angle of view (NO in step S608), the processing proceeds to step S609.

In step S609, the CPU 201 calculates the difference between the position of the center of mass calculated in step S607 and the center position of the angle of view on the captured video image, and calculates pan and tilt angular velocities depending on the difference as pan and tilt adjustment amounts. In the first embodiment, the difference between the calculated position of the center of mass and the center position of the angle of view on the captured video image is calculated. Alternatively, the difference in a polar coordinate space may be calculated by performing the polar coordinates conversion processing as described above. Examples of the method for calculating the angular velocities include a method of multiplying the distance corresponding to the difference between coordinate values in each of the pan direction and the tilt direction by a predetermined coefficient and determining the pan and tilt rotation directions depending on whether the calculated value is positive or negative. These techniques are known techniques, and thus detailed descriptions thereof are omitted.

In step S609, the CPU 201 calculates a zoom adjustment amount so that the size of the rectangular area of each subject is kept substantially constant. As the size of the rectangular area of each subject, not only the size of the circumscribed rectangular area of the subject, but also, for example, the size of an organ of a person, such as a face size, may be detected, and the zoom adjustment amount may be calculated so that the size is kept constant. The size of the rectangular area of each subject may also be calculated by randomly selecting one subject present in the automatic selection area, or may be calculated as an average size of the rectangular areas of three subjects. Alternatively, the zoom adjustment amount may be calculated so that the size of the circumscribed rectangular area enclosing three subjects is kept constant.

The subject tracking method using the technique for calculating and controlling the pan and tilt rotation directions and speeds as described above is merely an example, and any other method may also be used. Examples of the subject tracking method include a method of calculating a target position in pan/tilt rotation and tracking each subject.

In step S610, the CPU 201 converts the calculation result obtained in step S609 into a control command in accordance with a prescribed protocol as a method for controlling the PTZ camera 100, and writes the control command into the RAM 202.

In step S611, the CPU 201 reads out the control command that is converted and written into the RAM 202 in step S610, and transmits the control command to the PTZ camera 100 via the network I/F 204, and then the processing returns to the first step in the loop processing.

In the first embodiment, an example where it is determined whether the position of the center of mass matches the center of angle of view in step S608 has been described above. For example, if the difference between the position of the center of mass and the center of angle of view falls within a predetermined range, a so-called dead zone in which control processing of the PTZ camera 100 is not performed may be provided. This prevents, for example, the PTZ camera 100 from being excessively controlled.

On the other hand, if the CPU 201 determines that the longest distance between subjects is more than or equal to the predetermined distance in step S606 and the processing proceeds to step S612, the CPU 201 reads out the pan, tilt, and zoom values indicating the bird's eye view composition written into the RAM 202 in step S502. Further, the CPU 201 determines the pan, tilt, and zoom values to be tracking target positions. In other words, the pan, tilt, and zoom values written into the RAM 202 in step S502 are the pan, tilt, and zoom values for the bird's eye view composition. Accordingly, these values are determined to be the tracking target positions, thereby making it possible to switch the composition of the PTZ camera 100 to the bird's eye view composition.

In step S613, the CPU 201 generates a control command in accordance with a prescribed protocol as a method for controlling the PTZ camera 100 based on the pan, tilt, and zoom values for the bird's eye view composition read out in step S612, and writes the control command into the RAM 202.

In step S614, the CPU 201 reads out the control command written into the RAM 202 in step S613 and transmits the control command to the PTZ camera 100 via the network I/F 204, and then the processing returns to the first step in the loop processing.

Next, processing in the flowchart of Fig. 6B to be executed by the PTZ camera 100 during the tracking operation will be described.

In step S701, the CPU 101 of the PTZ camera 100 receives the control command from the edge AI device 200 operating in the same manner as in the flowchart illustrated in Fig. 6A via the network I/F 105. The CPU 101 writes the control command transmitted from the edge AI device 200 into the RAM 102.

In step S702, the CPU 101 reads out drive direction and drive amount values corresponding to the adjustment amounts in the pan and tilt directions from the control command stored in the RAM 102. Further, the CPU 101 reads out lens drive direction and drive amount values corresponding to the adjustment amount in the zoom direction from the control command.

In step S703, the CPU 101 calculates drive parameters for pan/tilt/zoom driving based on the values read out from the RAM 102 in step S702. For example, the CPU 101 calculates a drive parameter for controlling a motor or the like for pan/tilt driving in the drive unit 109 and a drive parameter for zoom driving based on the values read out from the RAM 102. The CPU 101 may obtain drive parameters with reference to a conversion table preliminarily held in the ROM 103 based on the drive direction and drive amount values included in the received control command.

In step S704, the CPU 101 controls the drive unit 109 via the drive I/F 108 based on the drive parameters calculated in step S703. The drive unit 109 performs pan/tilt/zoom driving operations based on the drive parameters so that the PTZ camera 100 can perform operations in the imaging direction (pan and tilt direction) and the angle of view (zoom). Accordingly, the imaging system according to the first embodiment can switch the composition and camerawork of the PTZ camera 100 depending on the status, for example, at the start of a match, at the end of a match, or during a match, in a competitive match or the like.

<Description of Characteristic Operation>

A characteristic operation in the imaging system using the above-described control operation as a basic operation will be described.

A method in which the edge AI device 200 appropriately controls the PTZ camera 100 in a case where another subject has entered the automatic selection area in a status where the players 700a and 700b and the referee 701 are detected will now be described in detail.

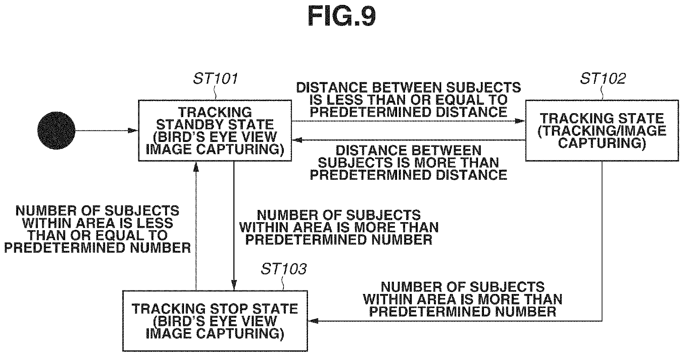

The edge AI device 200 has three states as illustrated in Fig. 9 so as to appropriately control the PTZ camera 100 depending on the status within the automatic selection area.

When the edge AI device 200 is powered on by the user and activation for the edge AI device 200 to be ready for tracking of a subject is completed, the state transitions to a tracking standby state (ST101). Next, in the case of starting the tracking operation based on the longest distance between subjects described above in step S606 illustrated in Fig. 6A, the state transitions to a tracking state (ST102), and then, if the distance between the subjects is increased, the state transitions to the tracking standby state (ST101). In the tracking state (ST102), if it is determined that the number of subjects within the automatic selection area is greater than a predetermined number, the state transitions to a tracking stop state (ST103). This state transition is aimed to prevent a situation where a subject other than the assumed subject enters the automatic selection area and the subject to be recognized by AI is erroneously detected and erroneously tracked, so that the PTZ camera 100 is controlled in an unintended direction.

In the tracking standby state (ST101), also when it is determined that the number of subjects within the automatic selection area is greater than the predetermined number, the state transitions to the tracking stop state (ST103), thereby preventing an inappropriate control operation of the PTZ camera 100 as described above.

The state and state transition conditions for the edge AI device 200 based on the characteristic operation have been described above.

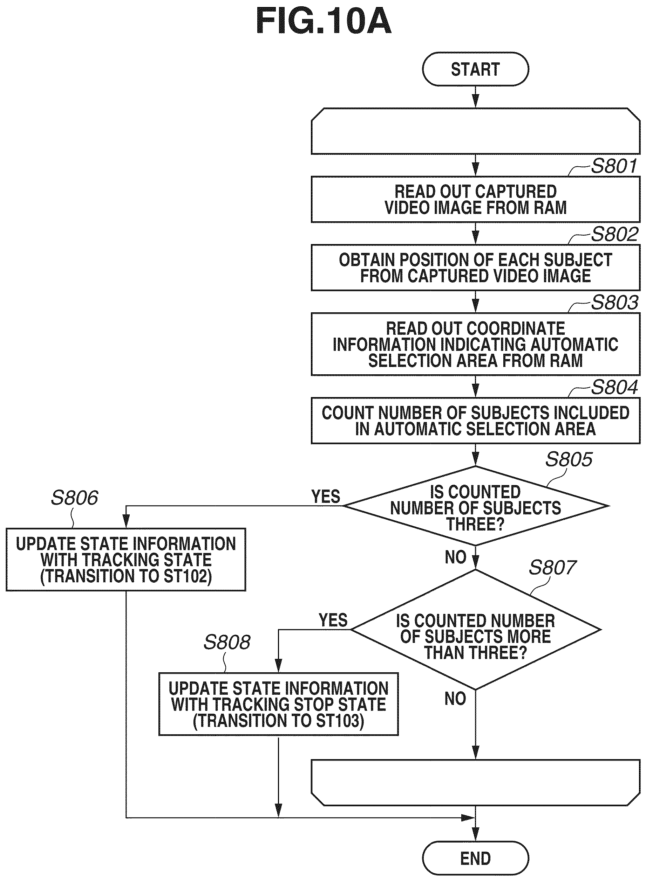

Next, a control flowchart for the edge AI device 200 in each state will be described with reference to Figs. 10A to 10C.

Figs. 10A to 10C are flowcharts in which control processing depending on the number of detected subjects is added based on the flowcharts illustrating subject tracking processing illustrated in Figs. 6A and 6B. Respective control flowcharts for the edge AI device 200 in the tracking standby state (ST101), the tracking state (ST102), and the tracking stop state (ST103) will be described below in order from Fig. 10A illustrating the control flowchart for the edge AI device 200 in ST101.

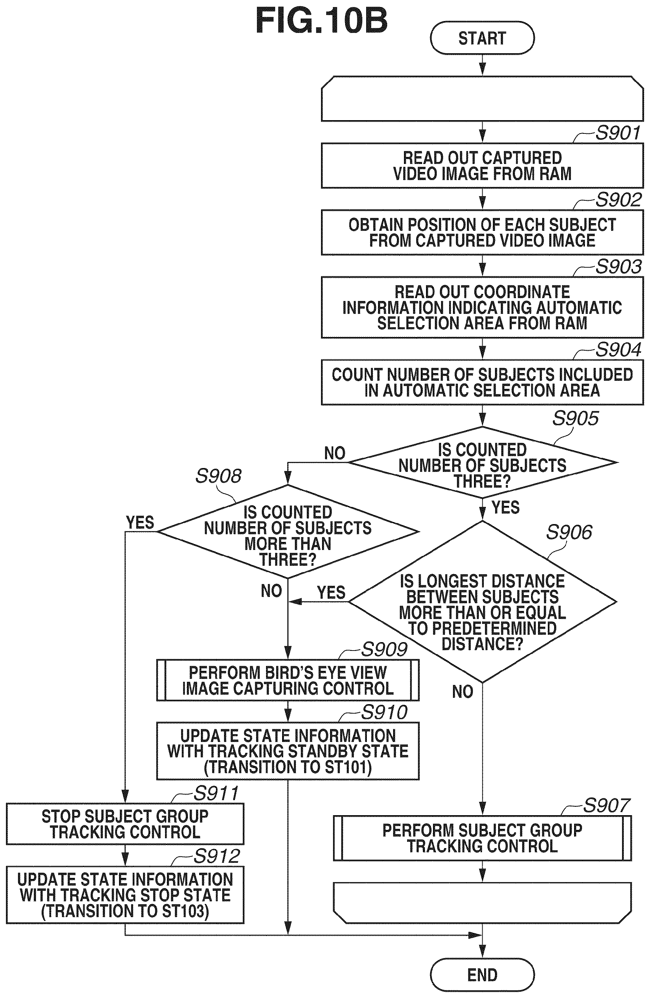

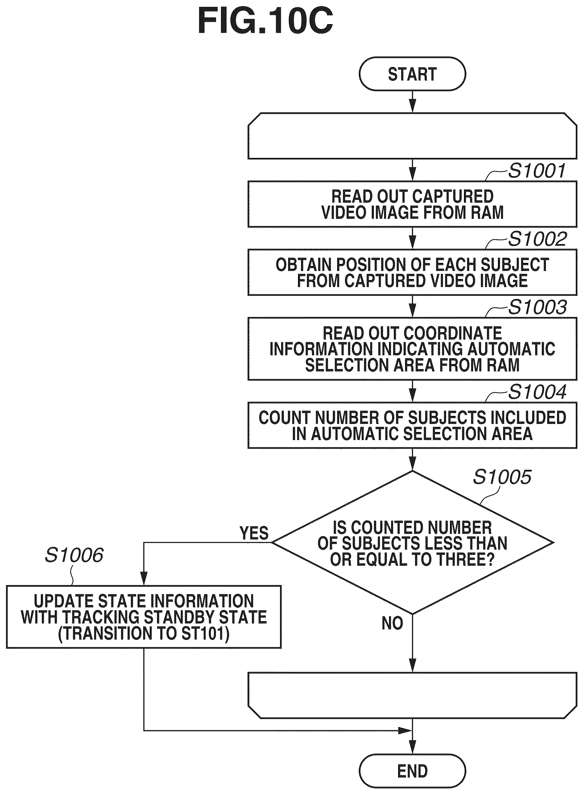

Fig. 10A is a control flowchart when the edge AI device 200 is in the tracking standby state (ST101) that is an initial state after power-on. Not only in this flowchart (Fig. 10A), but also in the flowcharts illustrated in Figs. 10B and 10C, predetermined loop processing is continued unless a trigger for state transition is generated.

In step S801, the CPU 201 of the edge AI device 200 sequentially reads out the captured video image stored in the RAM 202, and transfers the captured video image to the inference unit 207. This processing is similar to step S601.

In step S802, the inference unit 207 detects a subject from the captured video image and writes inference result information as the detection result into the RAM 202. This processing is similar to step S602.

In step S803, the CPU 201 reads out coordinate information indicating the automatic selection area stored in the RAM 202 in step S202 illustrated in Fig. 3B described above from the RAM 202. This processing is similar to step S603.

In step S804, the CPU 201 reads out positional information about the rectangular area of the subject in the inference result stored in the RAM 202 in step S802, and counts the number of subjects present in the automatic selection area based on the positional information about the rectangular area. This processing is similar to step S604.

In step S805, the CPU 201 determines whether the number of subjects counted in step S804 satisfies a predetermined condition, that is, a predetermined number. This processing is similar to step S605.

If the CPU 201 determines that the counted number of subjects is three (YES in step S805), the processing proceeds to step S806. In step S806, the state information held in the edge AI device 200 is overwritten with the tracking state ST102, and the loop processing ends. On the other hand, if the CPU 201 determines that the counted number of subjects is not three (NO in step S805), the processing proceeds to step S807.

In step S807, the CPU 201 determines whether the counted number of subjects is more than three. If the CPU 201 determines that the counted number of subjects is more than three (YES in step S807), the processing proceeds to step S808. In step S808, the state information held in the edge AI device 200 is overwritten with the tracking stop state ST103, and the loop processing ends. On the other hand, if the CPU 201 determines that the counted number of subjects is not more than three (NO in step S807), the tracking standby state ST101 is maintained and the loop processing is continued.

Fig. 10B is a control flowchart when the edge AI device 200 is in the tracking state (ST102). Steps S901 to S905 are respectively similar to steps S801 to S805 illustrated in Fig. 10A, and thus descriptions thereof are omitted.

In step S905, if the CPU 201 determines that the counted number of subjects is three (YES in step S905), the processing proceeds to step S906. In step S906, the CPU 201 determines whether the longest inter-subject distance 900a is more than or equal to a predetermined distance. If the longest inter-subject distance 900a is not more than or equal to the predetermined distance (that is, less than the predetermined distance) (NO in step S906), the processing proceeds to step S907. The processing of step S907 is a sub-process of executing control processing to track three subjects as a detected subject group. The sub-process corresponds to the processing of steps S606 to S611 illustrated in Fig. 6A, in which the CPU 201 calculates the pan, tilt, and zoom adjustment amounts based on the position of the center of mass of the three subjects, and controls the PTZ camera 100. After the processing of step S907 completes, the processing returns to step S901 to continue the loop processing.

On the other hand, if the CPU 201 determines that the counted number of subjects is not three (NO in step S905), the processing proceeds to step S908. In step S908, the CPU 201 determines whether the number of subjects is more than three. In step S908, if the CPU 201 determines that the counted number of subjects is more than three (YES in step S908), the processing proceeds to step S911. In step S911, the CPU 201 stops the subject group tracking control operation.

In step S912, the CPU 201 overwrites the state information held in the edge AI device 200 with the tracking stop state ST103, and the loop processing ends. On the other hand, if the CPU 201 determines that the counted number of subjects is not more than three in step S908 (NO in step S908), the processing proceeds to step S909. The processing of step S909 is a sub-process for controlling the PTZ camera 100 to capture a bird's eye view image. The sub-process corresponds to the processing of steps S612 to S614 illustrated in Fig. 6A, in which the CPU 201 reads out the pan, tilt, and zoom values indicating the preliminarily held bird's eye view composition, generates a control command based on the values, and transmits the control command to the PTZ camera 100. This makes it possible to control the PTZ camera 100 to change the composition to the bird's eye view composition adjusted in advance by the user. In step S910, the CPU 201 overwrites the state information held in the edge AI device 200 with the tracking standby state ST101, and the loop processing ends. After the subject group tracking control operation is stopped in step S911, the sub-process for controlling the PTZ camera 100 to capture a bird's eye view image may be executed to reset the system state. In this case, the sub-process can be executed at various timings, for example, immediately after the subject group tracking control operation is stopped, or after a lapse of a predetermined period of time. However, the execution timing is not limited and may be changed so that the sub-process can be executed at an appropriate timing in each case.

Fig. 10C is a control flowchart when the edge AI device 200 is in the tracking stop state (ST103). Steps S1001 to S1005 are respectively similar to steps S801 to S805 illustrated in Fig. 10A, and thus descriptions thereof are omitted.

In step S1005, if the CPU 201 determines that the counted number of subjects is less than or equal to three (less than or equal to the predetermined number) (YES in step S1005), the processing proceeds to step S1006. In step S1006, the state information held in the edge AI device 200 is overwritten with the tracking standby state ST101, and the loop processing ends. On the other hand, if the CPU 201 determines that the counted number of subjects is not less than or equal to three (NO in step S1005), the processing returns to step S1001 to perform the loop processing.

However, in step S1005, if the CPU 201 determines that the counted number of subjects is less than or equal to three (less than or equal to the predetermined number), the state information held in the edge AI device 200 may be overwritten not with the tracking standby state ST101, but with the tracking state ST102.

While the first embodiment illustrates an example where the values of the three subjects are preliminarily held as thresholds for counting the number of subjects as described above, for example, a method of registering each person image in advance in the edge AI device 200 may be provided to the user and the registered number of persons may be used as the threshold.

It can be assumed that the inference result from the inference unit 207 regarding the counted number of subjects described above can include an erroneous detection content. As a specific example, a result indicating that a person is present at a position where no person exists in reality on the image can be output. In such a case, the size of the rectangular area that can be calculated based on positional information about each subject included in the detection result tends to be extremely small. To exclude such an erroneous result from the counting target, the following processing may be added. That is, if the rectangular area that can be calculated based on the inferred positional information about the subject is less than or equal to a predetermined size, the rectangular area is excluded from the counting target. It is also assumed that the size of a rectangular area obtained as a detection result is extremely large in some AI models to be used. In this case, a threshold may be set so as to exclude from the counting target a detection result indicating that the size of a rectangular area is more than or equal to a predetermined size. Specifically, if the size of the rectangular area that can be calculated based on the positional information about the subject falls outside a predetermined range, the rectangular area can be excluded from the target of counting the number of subjects.

As for the subject counting method described above, a function for outputting a vector representing an appearance feature amount of a person area on the image that is inferred by the inference unit 207 may be further provided, and a method using the result may be applied. Specifically, the inference unit 207 extracts a feature amount in each person area, determines whether the person is a different person depending on whether a distance between vectors as the feature amount is a predetermined distance, and counts the number of persons determined to be different persons, thereby making it possible to count the number of subjects.

While the first embodiment illustrates an example where the subject group tracking operation is stopped when more than the predetermined number of persons have entered the area, for example, if a second in a competitive match has entered the area, another subject tracking control operation may be additionally performed. For example, to capture an image of communication between a second and a player, the inference unit 207 may recognize the second and perform control processing to zoom in on the two persons, that is, the second and the player.

As described above, according to the first embodiment, the state can be switched between the state of tracking the subject and the state of stopping tracking of the subject based on the counted number of subjects. Specific examples of this processing include processing of updating the state with the tracking stop state in step S808 illustrated in Fig. 10A and in step S912 illustrated in Fig. 10B. These processing operations make it possible to reduce the occurrence of unintended imaging direction control of the PTZ camera 100 due to erroneous recognition of a subject to be imaged in a case where more than the assumed number of subjects are detected by the edge AI device 200 and control processing for recognizing a desired subject group is executed. That is, according to the first embodiment, it is possible to prevent unintended imaging in the case of automatically capturing an image of a subject.

<Second Embodiment>

In the first embodiment, an example where the edge AI device 200 detects subjects from a captured video image obtained by the PTZ camera 100 and determines whether subject group tracking control processing is performed depending on the number of detected subjects has been described above. A second embodiment is a modified example in which the determination processing executed by the edge AI device 200 is performed in the PTZ camera 100. Only differences from the first embodiment will be mainly described below.

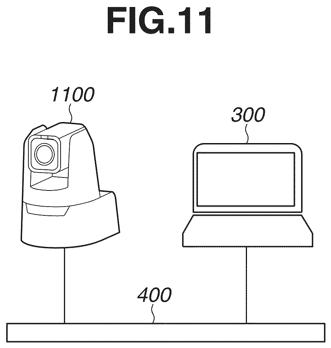

Fig. 11 illustrates a configuration example of an imaging system according to the second embodiment. As illustrated in Fig. 11, in the imaging system according to the second embodiment, a PTZ camera 1100 and the PC 300 are connected via the network 400. In the second embodiment, the PTZ camera 1100 detects a subject from a video image captured by the PTZ camera 1100, and performs pan/tilt/zoom operations depending on the detection result, thereby performing subject automatic tracking processing. In the second embodiment, the PTZ camera 1100 functions as an image capturing control apparatus for controlling an image processing unit 1106, an image sensor 1107, a drive I/F 1108, and a drive unit 1109, which are described below. The PTZ camera 1100 according to the second embodiment obtains a distance between subjects by measuring the distance between subjects and switches the operation between a tracking operation and a bird's eye view composition operation based on the distance between subjects. On the other hand, the PC 300 according to the second embodiment makes various settings regarding imaging and transmits various kinds of settings information regarding imaging to the PTZ camera 1100, like in the first embodiment.

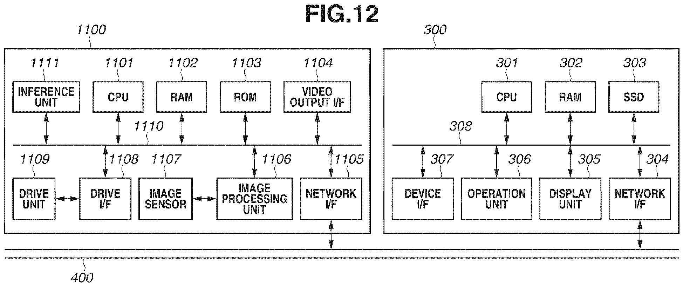

Fig. 12 is a block diagram illustrating an internal configuration example of each of the PTZ camera 1100 and the PC 300 in the imaging system according to the second embodiment. The internal configuration and operations of the PC 300 according to the second embodiment are substantially the same as those of the PC 300 according to the first embodiment, and thus detailed descriptions thereof are omitted. However, in the second embodiment, the PC 300 communicates with the PTZ camera 1100 via the network I/F 304. The image processing unit 1106, the image sensor 1107, the drive I/F 1108, and the drive unit 1109 in the PTZ camera 1100 correspond to examples of the image capturing unit. The configurations of a CPU 1101, a RAM 1102, a ROM 1103, a video output I/F 1104, a network I/F 1105, an image processing unit 1106, an image sensor 1107, a drive I/F 1108, a drive unit 1109, and an internal bus 1110 in the PTZ camera 1100 are substantially the same the configurations of the CPU 101, the RAM 102, the ROM 103, the video output I/F 104, the network I/F 105, the image processing unit 106, the image sensor 107, the drive I/F 108, the drive unit 109, and the internal bus 110 in the PTZ camera 100 according to the first embodiment, and thus detailed descriptions thereof are omitted.

The PTZ camera 1100 includes an inference unit 1111. The inference unit 1111 infers the presence or absence of a subject, and if there is a subject, the inference unit 1111 infers the position or the like of the subject, based on image data transferred to the RAM 1102 from the image processing unit 1106. The configuration and inference processing of the inference unit 1111 are substantially the same as those of the inference unit 207 in the edge AI device 200 according to the first embodiment, and thus detailed descriptions thereof are omitted. The processing of the inference unit 1111 may be performed by the CPU 1101.

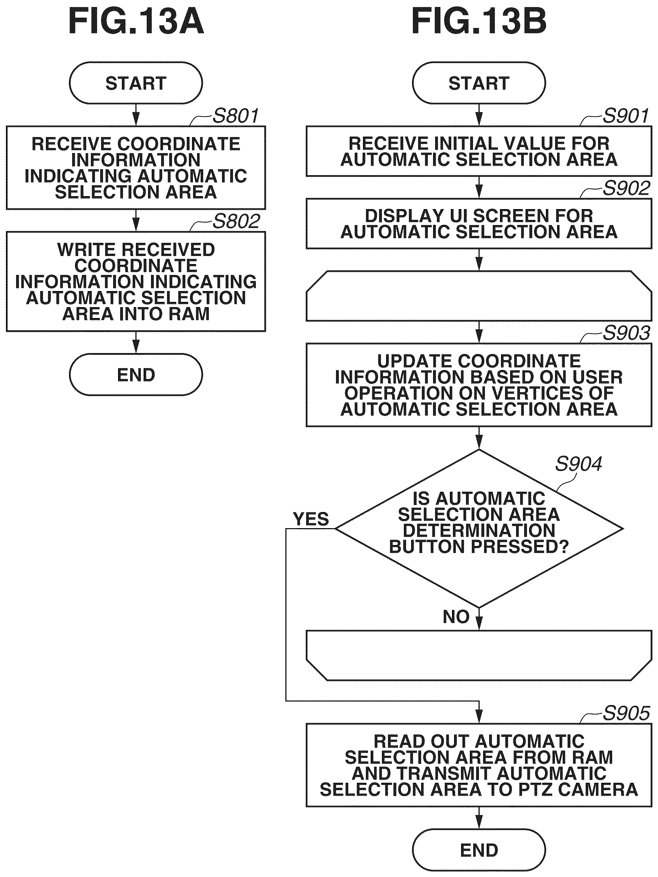

Next, an operation in each device of the imaging system according to the second embodiment will be described with reference to Figs. 13A to 15. The flowcharts illustrated in Figs. 13A and 13B, Figs. 14A and 14B, and Fig. 15 correspond to the flowcharts illustrated in Figs. 3A to 3C, Figs. 5A to 5C, and Figs. 6A and 6B according to the first embodiment, and the processing of corresponding step is substantially the same. Accordingly, only processing different from the processing according to the first embodiment will be mainly described below.

Figs. 13A and 13B are flowcharts each illustrating a setup operation flow of making various settings regarding imaging for the automatic selection area in the imaging system according to the second embodiment. Fig. 13A is a flowchart illustrating an operation to be performed by the PTZ camera 1100. Fig. 13B is a flowchart illustrating an operation to be performed by the PC 300. In the second embodiment, the PC 300 generates various kinds of settings information regarding imaging for the automatic selection area based on a user operation, and transmits the various kinds of settings information to the PTZ camera 1100. The PTZ camera 1100 stores the various kinds of settings information regarding imaging received from the PC 300.

The processing of steps S901 to S904 in the flowchart of Fig. 13B illustrating the automatic selection area setup operation in the PC 300 are substantially the same as steps S101 to S104 illustrated in Fig. 3A according to the first embodiment, and thus descriptions thereof are omitted.

In step S904, the CPU 301 of the PC 300 determines whether pressing of the automatic selection area determination button 801 is received as an input from the user through the operation unit 306. If it is determined that pressing of the automatic selection area determination button 801 is received as an input (YES in step S904), the loop processing ends and the processing proceeds to step S905.

In step S905, the CPU 301 reads out coordinate information indicating the automatic selection area from the RAM 302 and transmits the coordinate information to the PTZ camera 1100 via the network I/F 304.

Next, as illustrated in step S801 in the flowchart illustrated in Fig. 13A, the CPU 1101 of the PTZ camera 1100 receives coordinate information indicating the automatic selection area transmitted from the PC 300 via a network I/F 1105.

In step S802, the CPU 1101 writes the received coordinate information indicating the automatic selection area into the RAM 1102.

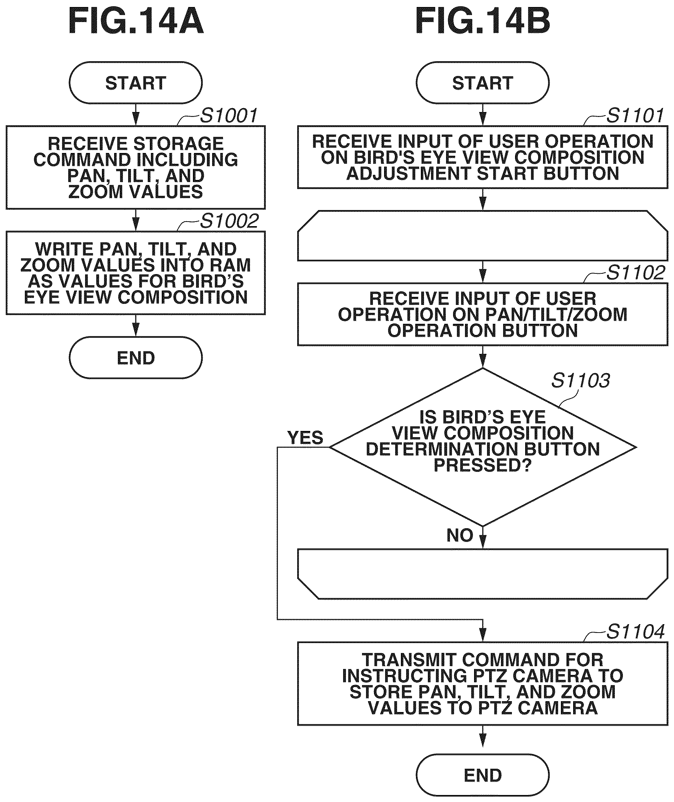

Figs. 14A and 14B are flowcharts each illustrating a setup operation flow for making various settings regarding imaging for the bird's eye view composition in the imaging system according to the second embodiment. Fig. 14A is a flowchart illustrating an operation to be performed by the PTZ camera 1100, and Fig. 14B is a flowchart illustrating an operation to be performed by the PC 300. In the second embodiment, the PC 300 generates various kinds of settings information regarding imaging for the bird's eye view composition based on a user operation, and transmits the various kinds of settings information to the PTZ camera 1100. Then, the PTZ camera 1100 stores the various kinds of settings information regarding imaging received from the PC 300.

First, an operation in the PC 300 will be described with reference to Fig. 14B.

Processing of step S1101 is substantially the same as step S401 illustrated in Fig. 5B according to the first embodiment, and thus description thereof is omitted. Loop processing of the subsequent steps S1102 and S1103 is substantially the same as the loop processing of steps S402 to S403 illustrated in Fig. 5B according to the first embodiment, and thus descriptions thereof are omitted.

In step S1103, if the CPU 301 determines that pressing of the bird's eye view composition determination button 803 is received as an input from the user through the operation unit 306 (YES in step S1103), the loop processing ends and the processing proceeds to step S1104.

In step S1104, the CPU 301 transmits a command (referred to as a storage command) for instructing the PTZ camera 1100 to store the pan, tilt, and zoom values to the PTZ camera 1100 from the network I/F 304.

Next, an operation of the PTZ camera 1100 will be described with reference to Fig. 14A.

In step S1001, the CPU 1101 of the PTZ camera 1100 receives the storage command transmitted from the PC 300 via the network I/F 1105.

In step S1002, the CPU 1101 writes the pan, tilt, and zoom values of the PTZ camera 1100 at a timing when the storage command is received from the PC 300 into the RAM 1102 as values for the bird's eye view composition.

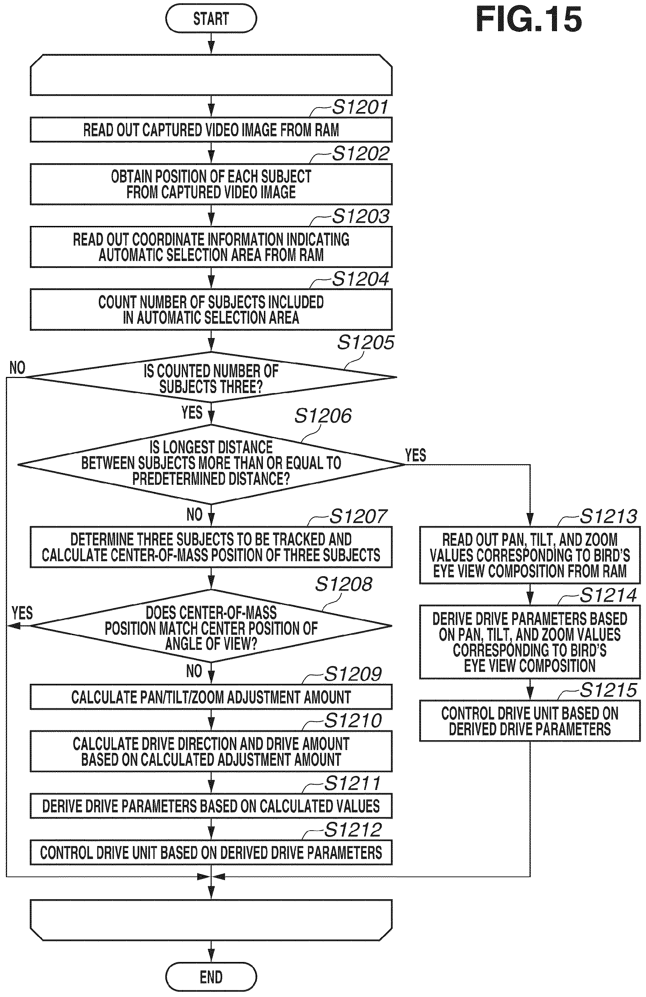

Fig. 15 is a flowchart illustrating an operation to be performed during tracking processing executed in the PTZ camera 1100 after the setup operation for the automatic selection area and the bird's eye view composition as described above is completed in the imaging system according to the second embodiment. In the imaging system according to the second embodiment, the PTZ camera 1100 detects each subject position from the captured video image and performs pan/tilt/zoom operations depending on the subject position, thereby performing automatic tracking processing. Further, the PTZ camera 1100 according to the second embodiment calculates the distance between subjects based on the subject position inferred by the inference unit 1111, and switches the operation between the automatic tracking operation and the bird's eye view composition operation based on the distance between subjects.

Also, in the PTZ camera 1100 according to the second embodiment, like in the first embodiment, the captured video image sequentially captured at a predetermined frame rate is sequentially stored in the RAM 1102 in the PTZ camera 1100. Further, the PTZ camera 1100 detects a subject from the captured video image stored in the RAM 1102, and performs loop processing to track the subject. Loop processing of steps S1201 to S1215 illustrated in Fig. 15 is performed on each frame of the captured video image.

In step S1201, the CPU 1101 of the PTZ camera 1100 sequentially reads out the captured video image stored in the RAM 1102 and transfers the captured video image to the inference unit 1111.

In step S1202, the inference unit 1111 detects a subject from the captured video image read out from the RAM 1102, and writes inference result information as the detection result into the RAM 1102. Like the inference unit 207 according to the first embodiment, the inference unit 1111 according to the second embodiment also includes a learned model created using a machine learning technique such as deep learning, obtains a captured video image as input data, and outputs an inference result as output data. The inference result is information including positional information about persons, including the players and the referee, a type, and a score representing the likelihood as described above. The positional information about each subject (person) includes not only coordinate information about four vertices of each rectangular area, but also the width, height, and the like of the rectangular area.

In step S1203, the CPU 1101 reads out coordinate information indicating the automatic selection area stored in the RAM 1102 in step S802 illustrated in Fig. 13A described above.

In step S1204, the CPU 1101 reads out positional information about the rectangular area of the subject in the inference result stored in RAM 1102 in step S1202, and counts the number of subjects present in the automatic selection area based on the positional information about the rectangular area. The processing or the like of counting the number of persons within the automatic selection area is similar to that according to the first embodiment described above.

In step S1205, the CPU 1101 determines whether the number of subjects counted in step S1204 is a predetermined number (three in the second embodiment). If the CPU 1101 determines that the counted number of subjects is three (YES in step S1205), the processing proceeds to step S1206. If the CPU 1101 determines that the counted number of subjects is not three (NO in step S1205), processing of steps S1206 to S1212 is skipped and the processing proceeds to the subsequent loop processing.

Also, in the second embodiment, like in the first embodiment, if it is determined that the number of subjects is three and tracking processing starts and then the number of subjects becomes less than three in step S1205, the CPU 1101 may fix the pan, tilt, and zoom values. After that, if two players have returned to the automatic selection area and the CPU 1101 determines that the number of subjects within the automatic selection area is three in step S1205, the processing proceeds to step S1206 to perform control processing of the PTZ camera 1100 again.

In step S1206, the CPU 1101 obtains the longest distance between subjects among the distances between subjects included in the automatic selection area, and determines whether the longest distance between subjects is more than or equal to a predetermined distance. The predetermined distance is a distance threshold similar to that in the first embodiment. In step S1206, if the CPU 1101 determines that the longest distance between subjects is less than the predetermined distance (NO in step S1206), the processing proceeds to step S1207.

In step S1207, the CPU 1101 determines three subjects detected within the automatic selection area as the tracking target, and calculates the position of the center of mass of the three subjects in the same manner as in the first embodiment.

In step S1208, the CPU 1101 determines whether the position of the center of mass calculated in step S1207 matches the center position of the angle of view on the captured video image. If the CPU 1101 determines that the position of the center of mass matches the center position of the angle of view (YES in step S1208), the subsequent processing is skipped and the processing proceeds to the subsequent loop processing. On the other hand, if the CPU 1101 determines that the position of the center of mass does not match the center position of the angle of view (NO in step S1208), the processing proceeds to step S1209.

In step S1209, the CPU 1101 calculates the difference between the position of the center of mass calculated in step S1207 and the center position of the angle of view on the captured video image, and also calculates the pan and tilt adjustment amounts depending on the difference. Further, the CPU 1101 calculates the zoom adjustment amount so that the size of the rectangular area of the subject can be kept substantially constant. Like in the first embodiment, for example, zoom adjustment processing may be performed based on the size of an organ of a person such as a face size. The size of a rectangular area of each subject may be set by randomly selecting one subject present in the automatic selection area, or an average size of the rectangular areas may be set as the size of the rectangular area. The zoom adjustment amount may be calculated so that the size of a circumscribed rectangular area enclosing three subjects can be kept constant.

In step S1210, the CPU 1101 calculates the drive values corresponding to the adjustment amounts in the pan and tilt directions, and also calculates the lens drive direction and drive amount values corresponding to the adjustment amount in the zoom direction.

In step S1211, the CPU 1101 derives (calculates) drive parameters for pan/tilt/zoom driving operations based on the values calculated in step S1210.

In step S1212, the CPU 1101 controls the drive unit 1109 via the drive I/F 1108 based on the drive parameters derived in step S1211. The drive unit 1109 performs driving operations based on the drive parameters so that the PTZ camera 1100 can change the imaging direction (pan/tilt operation) and can perform an angle-of-view change operation. After step S1212, the processing returns to step S1201 as the first step in the loop processing.

On the other hand, if it is determined that the longest distance between subjects is more than or equal to the predetermined distance in step S1206 and the processing proceeds to step S1213, the CPU 1101 reads out the pan, tilt, and zoom values corresponding to the bird's eye view composition written in step S1002 from the RAM 1102. Then, the CPU 1101 determines the pan, tilt, and zoom values as the tracking target positions. In other words, the pan, tilt, and zoom values written into the RAM 1102 in step S1002 are determined to be the tracking target positions, thereby switching the composition of the PTZ camera 1100 to the bird's eye view composition.

In step S1214, the CPU 1101 derives a drive parameter for pan/tilt driving with a desired speed in a desired direction and a drive parameter for adjusting the angle of view, based on the pan, tilt, and zoom values indicating the bird's eye view composition read out in step S1213.

In step S1215, the CPU 1101 controls the drive unit 1109 via the drive I/F 1108 based on the drive parameters derived in step S1214. Thus, the drive unit 1109 performs the driving operation based on the drive parameters, so that the PTZ camera 1100 can perform the imaging direction change operation and also perform the angle-of-view change operation. After step S1215, the processing returns to step S1201 as the first step in the loop processing. This configuration enables the imaging system according to the second embodiment to switch the composition and camerawork of the PTZ camera 1100 depending on the status, for example, at the start of a match, at the end of a match, or during a match, in a competitive match or the like.

<Description of Characteristic Operation>

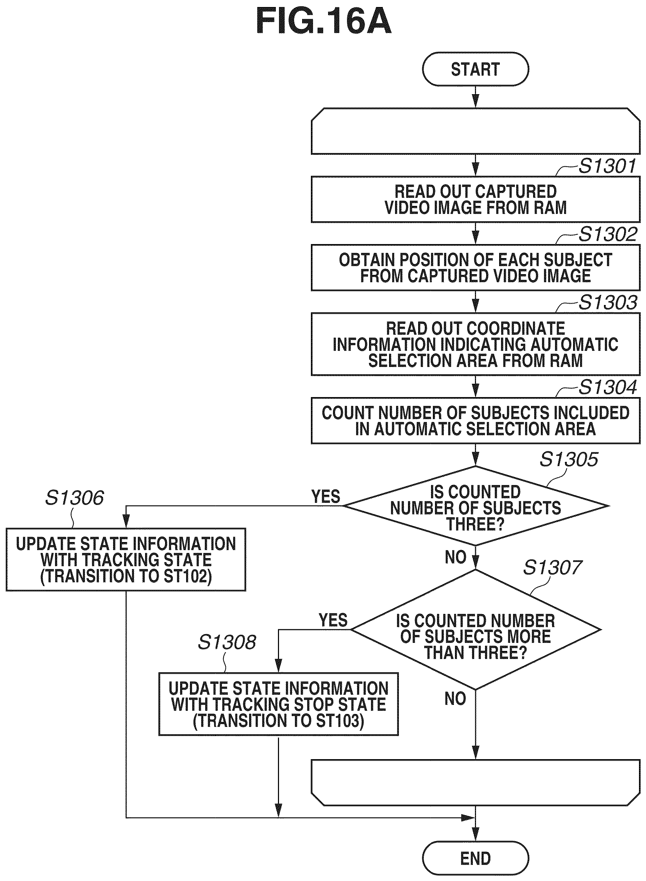

A characteristic operation in the imaging system using the above-described control operation as a basic operation will be described with reference to Figs. 16A to 16C. Like in the first embodiment, the characteristic operation according to the second embodiment is also an operation in which the PTZ camera 1100 changes the tracking state based on the state transition diagram illustrated in Fig. 9. State transition conditions are similar to those illustrated in Fig. 9, and thus descriptions thereof are omitted. Flowcharts illustrated in Figs. 16A to 16C respectively correspond to Figs. 10A to 10C according to the first embodiment, and the processing of corresponding step is substantially the same. Accordingly, processing different from that of the first embodiment will be mainly described.

Fig. 16A is a control flowchart when the PTZ camera 1100 is in the tracking standby state (ST101). The content of each control processing is similar to that illustrated in Fig. 10A, and thus detailed descriptions thereof are omitted.

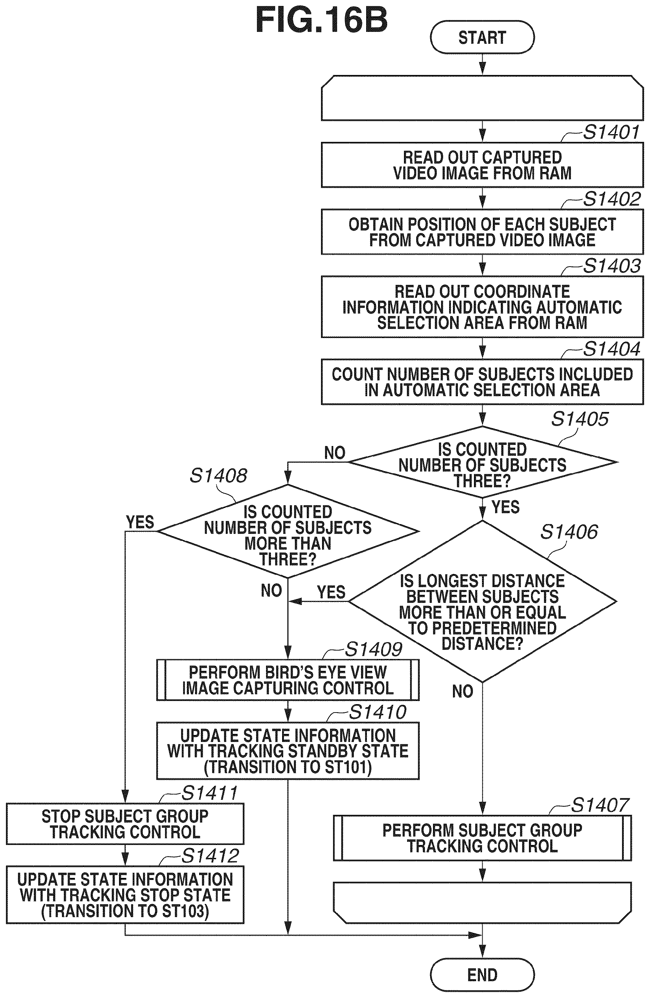

Fig. 16B is a control flowchart when the PTZ camera 1100 is in the tracking state (ST102). The processing illustrated in Fig. 16B is executed after control processing for updating the tracking state in step S1306 is executed in the processing illustrated in Fig. 16A. The control flowchart illustrated in Fig. 16B is also substantially the same as the control flowchart illustrated in Fig. 10B. Accordingly, only differences will be described.

A sub-process executed in step S1407 corresponds to the processing of steps S1206 to S1212 illustrated in Fig. 15. In the first embodiment, the processing corresponding to step S1212 is processing in which the edge AI device 200 transmits a control command to the PTZ camera 100 in step S611 illustrated in Fig. 6A. In the second embodiment, this processing is modified into processing in which the CPU 1101 controls the drive unit 1109 of the PTZ camera 1100.

A sub-process executed in step S1409 corresponds to steps S1213 to S1215 illustrated in Fig. 15. In the first embodiment, the processing corresponding to step S1215 is processing in which the edge AI device 200 transmits a control command to the PTZ camera 100 in step S614 illustrated in Fig. 6A. In the second embodiment, this processing is modified into processing in which the CPU 1101 controls the drive unit 1109 of the PTZ camera 1100.

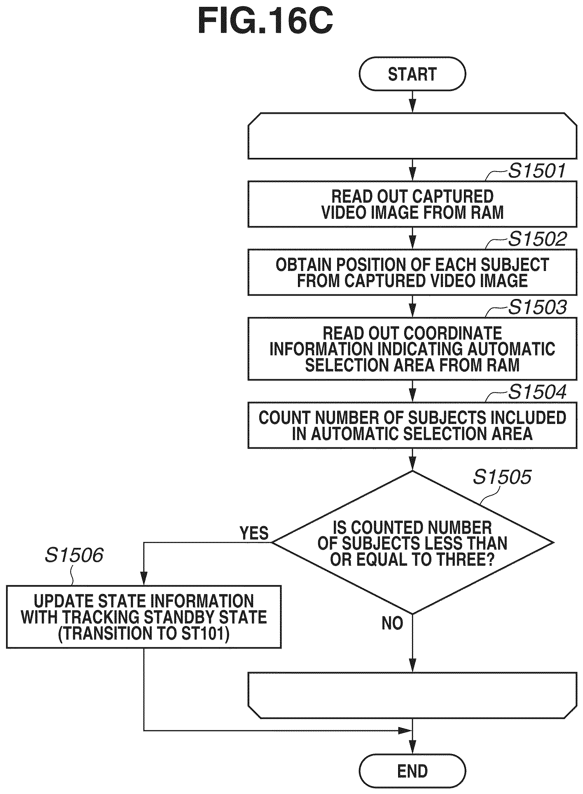

Fig. 16C is a control flowchart when the PTZ camera 1100 is in the tracking stop state (ST103). The content of each of control processes is similar to that illustrated in Fig. 10C, and thus detailed descriptions thereof are omitted.

As described above, the modification in which each subject position is inferred in the PTZ camera 1100 and the drive unit 1109 in the PTZ camera 1100 is controlled, which eliminates the need for the edge AI device 200. Consequently, advantageous effects similar to those of the first embodiment can be obtained even in a simpler configuration.

While the embodiments described above illustrate a case where a PTZ camera is used as an image capturing device, the present disclosure is not limited only to this case. The image capturing device is not limited only to a PTZ camera, as long as at least one of the pan and tilt directions and the zoom value can be changed.

The disclosure of embodiments includes the following configurations, a method, a program and a data carrier.

(Configuration 1)

An image capturing control apparatus includes an obtaining unit configured to obtain an image captured by an image capturing unit, a control unit configured to control the image capturing unit to track a subject included in the image based on the image obtained by the obtaining unit, and a counting unit configured to count the number of subjects included in the image obtained by the obtaining unit, in which the control unit controls the image capturing unit to switch, based on the number of subjects counted by the counting unit, between a state of tracking the subject and a state of stopping tracking of the subject.

(Configuration 2)

There is provided the image capturing control apparatus according to Configuration 1, in which in a case where the number of subjects counted by the counting unit is greater than a predetermined number, the control unit controls the image capturing unit to be brought into the state of stopping tracking of the subject from the state of tracking the subject.

(Configuration 3)

There is provided the image capturing control apparatus according to Configuration 1 or 2, in which in a case where the number of subjects counted by the counting unit is greater than a predetermined number, the control unit further controls the image capturing unit to change an imaging direction and an angle of view of the image capturing unit to a predetermined imaging direction and a predetermined angle of view, respectively.

(Configuration 4)

There is provided the image capturing control apparatus according to any one of Configurations 1 to 3, in which in a case where the number of subjects counted by the counting unit becomes less than or equal to a predetermined number from a state where the number of subjects counted by the counting unit is greater than the predetermined number, the control unit controls the image capturing unit to be brought into the state of tracking the subject from the state of stopping tracking of the subject.

(Configuration 5)

There is provided the image capturing control apparatus according to any one of Configurations 1 to 4, further including a measurement unit configured to measure a distance between subjects based on the image obtained by the obtaining unit, in which in a case where the number of subjects counted by the counting unit becomes less than or equal to a predetermined number from a state where the number of subjects counted by the counting unit is greater than the predetermined number, the control unit controls, based on the distance between subjects measured by the measurement unit, the image capturing unit to be brought into the state of tracking the subject from the state of stopping tracking of the subject.

(Configuration 6)

There is provided the image capturing control apparatus according to any one of Configurations 1 to 4, in which in a case where the number of subjects counted by the counting unit becomes less than or equal to a predetermined number from a state where the number of subjects counted by the counting unit is greater than the predetermined number, and in a case where the distance between subjects measured by the measurement unit is smaller than a predetermined distance, the control unit controls the image capturing unit to be brought into the state of tracking the subject from the state of stopping tracking of the subject.

(Configuration 7)

There is provided the image capturing control apparatus according to Configuration 5 or 6, in which the distance between subjects is a longest distance between subjects among a plurality of subjects.

(Configuration 8)

There is provided the image capturing control apparatus according to any one of Configurations 1 to 4, further including a measurement unit configured to measure a distance between subjects based on the image obtained by the obtaining unit, in which the control unit controls the image capturing unit to switch between the state of tracking the subject and a state of changing an imaging direction and an angle of view of the image capturing unit to a predetermined imaging direction and a predetermined angle of view, respectively, based on the number of subjects counted by the counting unit and the distance between subjects measured by the measurement unit.

(Configuration 9)

There is provided the image capturing control apparatus according to any one of Configurations 2 to 5, further including a registration unit configured to register the number of subjects, in which the predetermined number is the number of subjects registered by the registration unit.

(Configuration 10)

There is provided the image capturing control apparatus according to any one of Configurations 1 to 9, further including a calculation unit configured to calculate a size of the subject based on the image obtained by the obtaining unit, in which in a case where the size of the subject calculated by the calculation unit falls outside a predetermined range, the counting unit excludes the subject from a target of counting the number of subjects.

(Configuration 11)

There is provided the image capturing control apparatus according to any one of Configurations 1 to 9, further including an extraction unit configured to extract a feature amount of the subject based on the image obtained by the obtaining unit, in which the counting unit counts the number of subjects based on the feature amount extracted by the extraction unit.

(Method)

An image capturing control method includes obtaining an image captured by an image capturing unit, controlling the image capturing unit to track a subject included in the image based on the obtained image, and counting the number of subjects included in the obtained image, in which the image capturing unit is controlled to switch, based on the counted number of subjects, between a state of tracking the subject and a state of stopping tracking of the subject.

(Program)

There is provided a program for causing a computer to function as each means of the image capturing control apparatus according to any one of Configurations 1 to 11.

(Data Carrier)

There is provided a computer-readable data carrier having stored thereon a program for causing a computer to function as each means of the image capturing control apparatus according to any one of Configurations 1 to 11.

According to the present disclosure, it is possible to prevent unintended imaging in the case of automatically capturing an image of a subject.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

Various embodiments have been described in detail above but it will be understood that the present disclosure is not limited to these embodiments.

**Claims**

1. A control apparatus (300) comprising:

   obtaining means (301) configured to obtain an image captured by image capturing means (100, 1100);
   counting means (301) configured to count a number of subjects (700a, 700b, 701) included in the image; and
   control means (301) configured to control, based on the number of subjects, the image capturing means (100, 1100) to switch between a first state of tracking a subject and a second state of stopping tracking of the subject.

2. The control apparatus (300) according to claim 1, wherein in a case where the number of subjects (700a, 700b, 701) is greater than a predetermined number, the image capturing means (100, 1100) is controlled to be switched from the first state to the second state.

3. The control apparatus (300) according to claim 2, wherein in a case where the number of subjects (700a, 700b, 701) is greater than the predetermined number, the image capturing means (100, 1100) is further controlled to change an imaging direction and an angle of view of the image capturing means (100, 1100) to a predetermined imaging direction and a predetermined angle of view, respectively.

4. The control apparatus (300) according to claim 2 or 3, wherein in a case where the number of subjects becomes less than or equal to the predetermined number from a state where the number of subjects is greater than the predetermined number, the image capturing means (100, 1100) is controlled to be switched from the second state to the first state.

5. The control apparatus (300) according to claim 4, further comprising measurement means (301) configured to measure a distance (900a, 900b) between subjects based on the image,
   wherein in a case where the number of subjects becomes less than or equal to the predetermined number from the state where the number of subjects is greater than the predetermined number, the image capturing means (100, 1100) is controlled, based on the distance between subjects, to be switched from the second state to the first state.

6. The control apparatus (300) according to claim 5, wherein in a case where the number of subjects becomes less than or equal to the predetermined number from the state where the number of subjects is greater than the predetermined number, and in a case where the distance (900a, 900b) between subjects is smaller than a predetermined distance, the image capturing means (100, 1100) is controlled to be switched from the second state to the first state.

7. The control apparatus (300) according to claim 5 or 6, wherein the distance between subjects (900a, 900b) is a largest distance between subjects among a plurality of subjects.

8. The control apparatus (300) according to claim 1 or 2, further comprising measurement means (301) configured to measure a distance between subjects (900a, 900b) based on the image,
wherein the image capturing means (100, 1100) is controlled to switch between the first state and a third state of changing an imaging direction and an angle of view of the image capturing means (100, 1100) to a predetermined imaging direction and a predetermined angle of view, respectively, based on the number of subjects and the distance between subjects.

9. The control apparatus (300) according to claim 2, or any one of the preceding claims when dependent upon claim 2, further comprising registration means (301) configured to register the number of subjects,
wherein the predetermined number is the registered number of subjects.

10. The control apparatus according to any one of the preceding claims, further comprising calculation means (301) configured to calculate a size of the subject based on the image,
wherein in a case where the size of the subject falls outside a predetermined range, the subject is excluded from a target of counting the number of subjects.

11. The control apparatus according to any one of the preceding claims, further comprising extraction means (301) configured to extract a feature amount of the subject based on the image,
wherein the number of subjects is counted based on the feature amount.

12. A control method comprising:

obtaining an image captured by image capturing means (100, 1100);
counting a number of subjects (700a, 700b, 701) included in the image; and
controlling the image capturing means (100, 1100) to switch, based on the number of subjects, between a first state of tracking a subject and a second state of stopping tracking of the subject.

13. The control method according to the preceding claim, wherein in a case where the number of subjects is greater than a predetermined number, the image capturing means (100, 1100) is controlled to be switched from the first state to the second state.

14. A computer program comprising instructions which, when the program is executed by a computer, cause the computer to carry out the method of claim 12 or 13.

15. A computer-readable data carrier having stored thereon the computer program of claim 14.

# FIG.1

100

200

300

400

# FIG.2

*100*

*101* CPU
*102* RAM
*103* ROM
*104* VIDEO OUTPUT I/F

*110*

*109* DRIVE UNIT
*108* DRIVE I/F
*107* IMAGE SENSOR
*106* IMAGE PROCESSING UNIT
*105* NETWORK I/F

*200*

*208* VIDEO INPUT I/F
*201* CPU
*202* RAM
*203* ROM

*209*

*207* INFERENCE UNIT
*206* USER INPUT I/F
*205* VIDEO OUTPUT I/F
*204* NETWORK I/F

*400*

*300*

*301* CPU
*302* RAM
*303* SSD

*308*

*307* DEVICE I/F
*306* OPERATION UNIT
*305* DISPLAY UNIT
*304* NETWORK I/F

25

# FIG.3A

**START**

↓

*S101*

RECEIVE INITIAL VALUE FOR
AUTOMATIC SELECTION AREA

↓

*S102*

DISPLAY UI SCREEN FOR
AUTOMATIC SELECTION AREA

↓

↓

*S103*

UPDATE COORDINATE
INFORMATION BASED ON USER
OPERATION ON VERTICES OF
AUTOMATIC SELECTION AREA

↓

*S104*

IS AUTOMATIC
SELECTION AREA
DETERMINATION
BUTTON PRESSED?

YES →

NO ↓

↓

*S105*

READ OUT AUTOMATIC SELECTION
AREA FROM RAM AND TRANSMIT
AUTOMATIC SELECTION
AREA TO EDGE AI DEVICE

↓

**END**

# FIG.3B

**START**

↓

*S201*

RECEIVE COORDINATE
INFORMATION
INDICATING AUTOMATIC
SELECTION AREA

↓

*S202*

WRITE RECEIVED
COORDINATE
INFORMATION INDICATING
AUTOMATIC SELECTION
AREA INTO RAM

↓

**END**

**FIG.4**

# EP 4 765 843 A1

## FIG.5A

START

↓ S301

RECEIVE COMMAND FOR REQUESTING TRANSMISSION OF PAN, TILT, AND ZOOM VALUES

↓ S302

READ OUT PAN, TILT, AND ZOOM VALUES FROM RAM

↓ S303

TRANSMIT PAN, TILT, AND ZOOM VALUES TO PC

↓

END

## FIG.5C

START

↓ S501

RECEIVE PAN, TILT, AND ZOOM VALUES

↓ S502

WRITE PAN, TILT, AND ZOOM VALUES INTO RAM AS BIRD'S EYE VIEW COMPOSITION

↓

END

## FIG.5B

START

↓ S401

RECEIVE INPUT OF USER OPERATION ON BIRD'S EYE VIEW COMPOSITION ADJUSTMENT START BUTTON

↓

↓ S402

RECEIVE INPUT OF USER OPERATION ON PAN/TILT/ZOOM OPERATION BUTTON

↓ S403

IS BIRD'S EYE VIEW COMPOSITION DETERMINATION BUTTON PRESSED?

YES →

NO ↓

↓ S404

TRANSMIT COMMAND FOR REQUESTING TRANSMISSION OF PAN, TILT, AND ZOOM VALUES TO PTZ CAMERA

↓ S405

RECEIVE PAN, TILT, AND ZOOM VALUES

↓ S406

TRANSMIT PAN, TILT, AND ZOOM VALUES TO EDGE AI DEVICE

↓

END

28

# FIG.6A

START

S601
READ OUT CAPTURED VIDEO IMAGE FROM RAM

S602
OBTAIN POSITION OF EACH SUBJECT
FROM CAPTURED VIDEO IMAGE

S603
READ OUT COORDINATE INFORMATION INDICATING
AUTOMATIC SELECTION AREA FROM RAM

S604
COUNT NUMBER OF SUBJECTS INCLUDED
IN AUTOMATIC SELECTION AREA

S605
IS COUNTED NUMBER OF
SUBJECTS THREE?

NO

YES

S606
IS LONGEST DISTANCE
BETWEEN SUBJECTS MORE THAN OR EQUAL TO
PREDETERMINED DISTANCE?

YES

NO

S607
DETERMINE THREE SUBJECTS TO BE TRACKED AND
CALCULATE CENTER-OF-MASS POSITION OF THREE SUBJECTS

S608
DOES CENTER-OF-MASS
POSITION MATCH CENTER POSITION OF
ANGLE OF VIEW?

YES

NO

S609
CALCULATE PAN/TILT/ZOOM ADJUSTMENT AMOUNT

S610
CONVERT CALCULATED ADJUSTMENT
AMOUNT INTO CONTROL COMMAND

S611
TRANSMIT OBTAINED CONTROL COMMAND TO PTZ CAMERA

END

# FIG.6B

START

S701
RECEIVE CONTROL COMMAND

S702
READ OUT VALUES CORRESPONDING
TO DRIVE DIRECTION AND DRIVE
AMOUNT FROM CONTROL COMMAND

S703
CALCULATE DRIVE PARAMETERS
BASED ON READ VALUES

S704
CONTROL DRIVE UNIT BASED ON
CALCULATED DRIVE PARAMETERS

END

S612
READ OUT PAN, TILT, AND ZOOM
VALUES CORRESPONDING TO BIRD'S
EYE VIEW COMPOSITION FROM RAM

S613
GENERATE CONTROL COMMAND
BASED ON PAN, TILT, AND ZOOM
VALUES CORRESPONDING TO
BIRD'S EYE VIEW COMPOSITION

S614
TRANSMIT GENERATED CONTROL
COMMAND TO PTZ CAMERA

FIG.7A

1000

w

h

x

y

P(x,y)

FIG.7B

1001

1000

O

1

100

R

xpp

ypp

Q(X,Y,Z)

FIG.7C

Z-AXIS

Y-AXIS

φcam

θcam

R

X-AXIS

# FIG.8A

# FIG.8B

# FIG.9

ST101

**TRACKING STANDBY STATE (BIRD'S EYE VIEW IMAGE CAPTURING)**

DISTANCE BETWEEN SUBJECTS IS LESS THAN OR EQUAL TO PREDETERMINED DISTANCE

ST102

**TRACKING STATE (TRACKING/IMAGE CAPTURING)**

DISTANCE BETWEEN SUBJECTS IS MORE THAN PREDETERMINED DISTANCE

NUMBER OF SUBJECTS WITHIN AREA IS LESS THAN OR EQUAL TO PREDETERMINED NUMBER

NUMBER OF SUBJECTS WITHIN AREA IS MORE THAN PREDETERMINED NUMBER

ST103

NUMBER OF SUBJECTS WITHIN AREA IS MORE THAN PREDETERMINED NUMBER

**TRACKING STOP STATE (BIRD'S EYE VIEW IMAGE CAPTURING)**

# FIG.10A

```
                    ┌─────────┐
                    │  START  │
                    └─────────┘
                         │
                         ▼
        ┌────────────────────────────────┐
        │                                │
        └────────────────────────────────┘
                         │      ⌐S801
                         ▼
        ┌────────────────────────────────┐
        │      READ OUT CAPTURED          │
        │    VIDEO IMAGE FROM RAM         │
        └────────────────────────────────┘
                         │      ⌐S802
                         ▼
        ┌────────────────────────────────┐
        │  OBTAIN POSITION OF EACH SUBJECT│
        │   FROM CAPTURED VIDEO IMAGE     │
        └────────────────────────────────┘
                         │      ⌐S803
                         ▼
        ┌────────────────────────────────┐
        │      READ OUT COORDINATE        │
        │ INFORMATION INDICATING AUTOMATIC│
        │   SELECTION AREA FROM RAM       │
        └────────────────────────────────┘
                         │      ⌐S804
                         ▼
        ┌────────────────────────────────┐
        │ COUNT NUMBER OF SUBJECTS INCLUDED│
        │    IN AUTOMATIC SELECTION AREA  │
        └────────────────────────────────┘
                         │
                         ▼            S805
                  ╱─────────────────╲
          YES    ╱    IS COUNTED      ╲
     ◄──────────┤  NUMBER OF SUBJECTS   │
                 ╲     THREE?          ╱
                  ╲─────────────────╱
                         │ NO
                         ▼            S807
                  ╱─────────────────╲
          YES    ╱  IS COUNTED NUMBER ╲
     ◄──────────┤   OF SUBJECTS MORE    │
                 ╲    THAN THREE?      ╱
                  ╲─────────────────╱
                         │ NO
                         ▼
```

S806
UPDATE STATE INFORMATION WITH TRACKING STATE (TRANSITION TO ST102)

S808
UPDATE STATE INFORMATION WITH TRACKING STOP STATE (TRANSITION TO ST103)

END

# FIG.10B

START

↓

S901

**READ OUT CAPTURED
VIDEO IMAGE FROM RAM**

↓ S902

**OBTAIN POSITION OF EACH SUBJECT
FROM CAPTURED VIDEO IMAGE**

↓ S903

**READ OUT COORDINATE
INFORMATION INDICATING AUTOMATIC
SELECTION AREA FROM RAM**

↓ S904

**COUNT NUMBER OF SUBJECTS INCLUDED
IN AUTOMATIC SELECTION AREA**

↓ S905

**IS COUNTED
NUMBER OF SUBJECTS
THREE?**

NO → (S908)

**S908
IS COUNTED
NUMBER OF SUBJECTS
MORE THAN
THREE?**

YES ↓

YES → **S906
IS LONGEST DISTANCE
BETWEEN SUBJECTS
MORE THAN OR EQUAL
TO PREDETERMINED
DISTANCE?**

NO ← YES

NO ↓

S909

**PERFORM BIRD'S EYE VIEW
IMAGE CAPTURING CONTROL**

↓ S910

**UPDATE STATE INFORMATION
WITH TRACKING STANDBY STATE
(TRANSITION TO ST101)**

S911

**STOP SUBJECT GROUP
TRACKING CONTROL**

↓ S912

**UPDATE STATE INFORMATION
WITH TRACKING STOP STATE
(TRANSITION TO ST103)**

S907

**PERFORM SUBJECT GROUP
TRACKING CONTROL**

↓

END

# FIG.10C

START

S1001

READ OUT CAPTURED
VIDEO IMAGE FROM RAM

S1002

OBTAIN POSITION OF EACH SUBJECT
FROM CAPTURED VIDEO IMAGE

S1003

READ OUT COORDINATE
INFORMATION INDICATING AUTOMATIC
SELECTION AREA FROM RAM

S1004

COUNT NUMBER OF SUBJECTS INCLUDED
IN AUTOMATIC SELECTION AREA

S1005

IS COUNTED NUMBER
OF SUBJECTS LESS THAN
OR EQUAL TO THREE?

YES

S1006

UPDATE STATE INFORMATION
WITH TRACKING STANDBY STATE
(TRANSITION TO ST101)

NO

END

# FIG.11

# FIG.12

**1100**

**1111** INFERENCE UNIT

**1101** CPU

**1102** RAM

**1103** ROM

**1104** VIDEO OUTPUT I/F

**1110**

**1109** DRIVE UNIT

**1108** DRIVE I/F

**1107** IMAGE SENSOR

**1106** IMAGE PROCESSING UNIT

**1105** NETWORK I/F

**300**

**301** CPU

**302** RAM

**303** SSD

**308**

**307** DEVICE I/F

**306** OPERATION UNIT

**305** DISPLAY UNIT

**304** NETWORK I/F

**400**

# FIG.13A

START

S801
RECEIVE COORDINATE INFORMATION INDICATING AUTOMATIC SELECTION AREA

S802
WRITE RECEIVED COORDINATE INFORMATION INDICATING AUTOMATIC SELECTION AREA INTO RAM

END

# FIG.13B

START

S901
RECEIVE INITIAL VALUE FOR AUTOMATIC SELECTION AREA

S902
DISPLAY UI SCREEN FOR AUTOMATIC SELECTION AREA

S903
UPDATE COORDINATE INFORMATION BASED ON USER OPERATION ON VERTICES OF AUTOMATIC SELECTION AREA

S904
IS AUTOMATIC SELECTION AREA DETERMINATION BUTTON PRESSED?

YES

NO

S905
READ OUT AUTOMATIC SELECTION AREA FROM RAM AND TRANSMIT AUTOMATIC SELECTION AREA TO PTZ CAMERA

END

# FIG.14A

START

S1001

RECEIVE STORAGE
COMMAND INCLUDING
PAN, TILT, AND
ZOOM VALUES

S1002

WRITE PAN, TILT, AND
ZOOM VALUES INTO RAM
AS VALUES FOR BIRD'S
EYE VIEW COMPOSITION

END

# FIG.14B

START

S1101

RECEIVE INPUT OF USER OPERATION
ON BIRD'S EYE VIEW COMPOSITION
ADJUSTMENT START BUTTON

S1102

RECEIVE INPUT OF USER
OPERATION ON PAN/TILT/ZOOM
OPERATION BUTTON

S1103

IS BIRD'S EYE
VIEW COMPOSITION
DETERMINATION BUTTON
PRESSED?

YES

NO

S1104

TRANSMIT COMMAND FOR
INSTRUCTING PTZ CAMERA TO
STORE PAN, TILT, AND ZOOM
VALUES TO PTZ CAMERA

END

**FIG.15**

START

S1201
READ OUT CAPTURED VIDEO IMAGE FROM RAM

S1202
OBTAIN POSITION OF EACH SUBJECT
FROM CAPTURED VIDEO IMAGE

S1203
READ OUT COORDINATE INFORMATION INDICATING
AUTOMATIC SELECTION AREA FROM RAM

S1204
COUNT NUMBER OF SUBJECTS INCLUDED
IN AUTOMATIC SELECTION AREA

S1205
IS COUNTED NUMBER OF
SUBJECTS THREE?
— NO
— YES

S1206
IS LONGEST DISTANCE
BETWEEN SUBJECTS MORE THAN OR EQUAL TO
PREDETERMINED DISTANCE?
— YES
— NO

S1207
DETERMINE THREE SUBJECTS TO BE TRACKED AND
CALCULATE CENTER-OF-MASS POSITION OF THREE SUBJECTS

S1208
DOES CENTER-OF-MASS
POSITION MATCH CENTER POSITION OF
ANGLE OF VIEW?
— YES
— NO

S1209
CALCULATE PAN/TILT/ZOOM ADJUSTMENT AMOUNT

S1210
CALCULATE DRIVE DIRECTION AND DRIVE AMOUNT
BASED ON CALCULATED ADJUSTMENT AMOUNT

S1211
DERIVE DRIVE PARAMETERS BASED ON CALCULATED VALUES

S1212
CONTROL DRIVE UNIT BASED ON DERIVED DRIVE PARAMETERS

S1213
READ OUT PAN, TILT, AND ZOOM
VALUES CORRESPONDING TO BIRD'S
EYE VIEW COMPOSITION FROM RAM

S1214
DERIVE DRIVE PARAMETERS BASED
ON PAN, TILT, AND ZOOM VALUES
CORRESPONDING TO BIRD'S
EYE VIEW COMPOSITION

S1215
CONTROL DRIVE UNIT BASED ON
DERIVED DRIVE PARAMETERS

END

# FIG.16A

START

S1301
READ OUT CAPTURED
VIDEO IMAGE FROM RAM

S1302
OBTAIN POSITION OF EACH SUBJECT
FROM CAPTURED VIDEO IMAGE

S1303
READ OUT COORDINATE
INFORMATION INDICATING AUTOMATIC
SELECTION AREA FROM RAM

S1304
COUNT NUMBER OF SUBJECTS INCLUDED
IN AUTOMATIC SELECTION AREA

S1305
IS COUNTED
NUMBER OF SUBJECTS
THREE?

YES

S1306
UPDATE STATE INFORMATION
WITH TRACKING STATE
(TRANSITION TO ST102)

NO

S1307
IS COUNTED NUMBER
OF SUBJECTS MORE
THAN THREE?

YES

S1308
UPDATE STATE INFORMATION
WITH TRACKING STOP STATE
(TRANSITION TO ST103)

NO

END

# FIG.16B

START

S1401
READ OUT CAPTURED
VIDEO IMAGE FROM RAM

S1402
OBTAIN POSITION OF EACH SUBJECT
FROM CAPTURED VIDEO IMAGE

S1403
READ OUT COORDINATE
INFORMATION INDICATING AUTOMATIC
SELECTION AREA FROM RAM

S1404
COUNT NUMBER OF SUBJECTS INCLUDED
IN AUTOMATIC SELECTION AREA

S1405
IS COUNTED
NUMBER OF SUBJECTS
THREE?

NO

S1408
IS COUNTED
NUMBER OF SUBJECTS
MORE THAN
THREE?

YES

NO

YES

S1406
IS LONGEST DISTANCE
BETWEEN SUBJECTS
MORE THAN OR EQUAL
TO PREDETERMINED
DISTANCE?

YES

NO

S1409
PERFORM BIRD'S EYE VIEW
IMAGE CAPTURING CONTROL

S1410
UPDATE STATE INFORMATION
WITH TRACKING STANDBY STATE
(TRANSITION TO ST101)

S1411
STOP SUBJECT GROUP
TRACKING CONTROL

S1412
UPDATE STATE INFORMATION
WITH TRACKING STOP STATE
(TRANSITION TO ST103)

S1407
PERFORM SUBJECT GROUP
TRACKING CONTROL

END

42

# FIG.16C

START

S1501
READ OUT CAPTURED
VIDEO IMAGE FROM RAM

S1502
OBTAIN POSITION OF EACH SUBJECT
FROM CAPTURED VIDEO IMAGE

S1503
READ OUT COORDINATE
INFORMATION INDICATING AUTOMATIC
SELECTION AREA FROM RAM

S1504
COUNT NUMBER OF SUBJECTS INCLUDED
IN AUTOMATIC SELECTION AREA

S1505
IS COUNTED NUMBER
OF SUBJECTS LESS THAN
OR EQUAL TO THREE?

YES

S1506
UPDATE STATE INFORMATION
WITH TRACKING STANDBY STATE
(TRANSITION TO ST101)

NO

END

| | Europäisches Patentamt European Patent Office Office européen des brevets | **EUROPEAN SEARCH REPORT** | **Application Number** EP 25 21 5732 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 704 434 A2 (CANON KK [JP]) 4 March 2026 (2026-03-04) * paragraph [0012] - paragraph [0168] * ----- | 1,12,14, 15 | INV. H04N23/61 H04N23/611 H04N23/661 |
| X | US 2016/019764 A1 (TAKIGUCHI MASAHIRO [JP] ET AL) 21 January 2016 (2016-01-21) | 1-4,9, 11-15 | H04N23/69 H04N23/695 |
| Y | * paragraph [0035] - paragraph [0143] * ----- | 8,10 | H04N7/18 |
| Y | US 2009/102940 A1 (UCHIDA AKIHIRO [JP]) 23 April 2009 (2009-04-23) * paragraph [0042] - paragraph [0267] * ----- | 8,10 | |
| A | US 2009/102942 A1 (YOSHIZUMI SHINGO [JP]; SONY CORP [JP]; YAMAWAKI HIROKI [JP]) 23 April 2009 (2009-04-23) * paragraph [0057] - paragraph [0132] * ----- | 1-15 | |
| A | US 2007/274703 A1 (MATSUDA NORIHISA [JP]) 29 November 2007 (2007-11-29) * paragraph [0037] - paragraph [0157] * ----- | 1-15 | **TECHNICAL FIELDS SEARCHED (IPC)** |
| A | US 2024/056686 A1 (TSUNASHIMA NOBUHIRO [JP] ET AL) 15 February 2024 (2024-02-15) * paragraph [0083] - paragraph [0365] * ----- | 1,12,14, 15 | H04N |

The present search report has been drawn up for all claims

| Place of search | Date of completion of the search | Examiner |
|---|---|---|
| Munich | 27 March 2026 | Gil Zamorano, Gunnar |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

& : member of the same patent family, corresponding
　document

EPO FORM 1503 03.82 (P04C01)

## ANNEX TO THE EUROPEAN SEARCH REPORT
## ON EUROPEAN PATENT APPLICATION NO.

EP 25 21 5732

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2026

| Patent document cited in search report | | Publication date | Patent family member(s) | | Publication date |
|---|---|---|---|---|---|
| EP 4704434 | A2 | 04-03-2026 | CN | 121644971 A | 10-03-2026 |
| | | | EP | 4704434 A2 | 04-03-2026 |
| | | | JP | 2026044263 A | 12-03-2026 |
| | | | US | 20260067562 A1 | 05-03-2026 |
| US 2016019764 | A1 | 21-01-2016 | AU | 2014226829 A1 | 29-10-2015 |
| | | | AU | 2016262748 A1 | 15-12-2016 |
| | | | BR | 112015021801 A2 | 22-08-2017 |
| | | | CA | 2904251 A1 | 12-09-2014 |
| | | | CN | 105247856 A | 13-01-2016 |
| | | | DE | 112014001196 T5 | 26-11-2015 |
| | | | GB | 2527458 A | 23-12-2015 |
| | | | HK | 1219188 A1 | 24-03-2017 |
| | | | KR | 20150121055 A | 28-10-2015 |
| | | | SG | 11201507077P A | 29-10-2015 |
| | | | US | 2016019764 A1 | 21-01-2016 |
| | | | WO | 2014136978 A1 | 12-09-2014 |
| US 2009102940 | A1 | 23-04-2009 | CN | 101415074 A | 22-04-2009 |
| | | | EP | 2051506 A1 | 22-04-2009 |
| | | | JP | 4904243 B2 | 28-03-2012 |
| | | | JP | 2009100284 A | 07-05-2009 |
| | | | US | 2009102940 A1 | 23-04-2009 |
| US 2009102942 | A1 | 23-04-2009 | CN | 101415076 A | 22-04-2009 |
| | | | CN | 102158650 A | 17-08-2011 |
| | | | EP | 2051505 A2 | 22-04-2009 |
| | | | JP | 4894712 B2 | 14-03-2012 |
| | | | JP | 2009100301 A | 07-05-2009 |
| | | | KR | 20090039595 A | 22-04-2009 |
| | | | TW | 200934228 A | 01-08-2009 |
| | | | US | 2009102942 A1 | 23-04-2009 |
| US 2007274703 | A1 | 29-11-2007 | JP | 4654974 B2 | 23-03-2011 |
| | | | JP | 2007318225 A | 06-12-2007 |
| | | | US | 2007274703 A1 | 29-11-2007 |
| US 2024056686 | A1 | 15-02-2024 | EP | 4290852 A1 | 13-12-2023 |
| | | | US | 2024056686 A1 | 15-02-2024 |
| | | | WO | 2022168481 A1 | 11-08-2022 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2019029886 A